(19) **Europäisches Patentamt / European Patent Office / Office européen des brevets**

(11) **EP 4 123 513 A1**

(12) **EUROPEAN PATENT APPLICATION**
published in accordance with Art. 153(4) EPC

(43) Date of publication:
**25.01.2023 Bulletin 2023/04**

(21) Application number: **21772488.9**

(22) Date of filing: **09.03.2021**

(51) International Patent Classification (IPC):
**G06N 3/063** (2006.01)   **G06N 3/04** (2006.01)

(52) Cooperative Patent Classification (CPC):
**G06N 3/04; G06N 3/063**

(86) International application number:
**PCT/CN2021/079815**

(87) International publication number:
**WO 2021/185125 (23.09.2021 Gazette 2021/38)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **17.03.2020 CN 202010186495**

(71) Applicant: **Hangzhou Hikvision Digital Technology Co., Ltd.**
**Hangzhou, Zhejiang 310051 (CN)**

(72) Inventors:
• **PU, Shiliang**
  **Hangzhou, Zhejiang 310051 (CN)**
• **CHEN, Rudan**
  **Hangzhou, Zhejiang 310051 (CN)**
• **ZHANG, Yuan**
  **Hangzhou, Zhejiang 310051 (CN)**

(74) Representative: **Epping - Hermann - Fischer Patentanwaltsgesellschaft mbH**
**Schloßschmidstraße 5**
**80639 München (DE)**

(54) **FIXED-POINT METHOD AND APPARATUS FOR NEURAL NETWORK**

(57) The embodiments of the present application provide a fixed-point method and apparatus for a neural network, which performs at least one of the following low-bit quantizations on a neural network: performing a first low-bit quantization on input activation values of convolutional layers in the neural network, performing a second low-bit quantization on weights of convolution kernels of the convolutional layers in the neural network; for non-convolutional functional layers other than the convolutional layers in the neural network, performing a third low-bit quantization on input activation values of the non-convolutional functional layers; retraining the current low-bit quantized neural network; performing fixed-point processing based on each of low-bit quantization results in the retrained neural network; loading the fixed-point neural network; wherein the first low-bit, the second low-bit, and the third low-bit are within 1 to 8 bits. The embodiments of the present application enable the final activation values and/or weights of convolution kernels are represented by low-bit fixed-point, so that they can be easily transplanted into embedded platforms and application-specific integrated circuits.

FIG. 2b

EP 4 123 513 A1

**Description**

The present application claims the priority to a Chinese patent present application No. 202010186495.7, filed with the China National Intellectual Property Administration on March 17, 2020 and entitled "Fixed-point method and apparatus for neural network", which is incorporated herein by reference in its entirety.

**Technical Field**

The present application relates to the technology field of computer, and in particular, to a fixed-point method and apparatus for a neural network.

**Background**

In the computer, the numerical value will be stored according to different types such as integer and floating-point, occupying different bits of the computer. For example, floating-point numbers are generally represented by 32-bit or 64-bit with high-precision. Within the allowable precision loss range, the behavior of using fewer bits, such as 4bit, 8bit and 16bit, to represent the floating-point number is called quantization. Through the dynamic quantization algorithm, the quantized numerical value is discrete.

Neural network is an important algorithm in machine learning algorithm, which promotes the development of computer field. With the continuous research of people, the computational and storage complexity of its algorithm also increases. The constantly expanding computational complexity and spatial complexity pose a challenge to the performance of computing device. Under the condition of ensuring the target performance of neural network, quantizing each of parameters in neural network becomes the basis of neural network application.

With the wide application of neural networks, more and more miniaturized devices such as embedded systems need to use neural networks to implement various scenarios. Limited by hardware resources, it is necessary to reduce the processing resources occupied by neural networks when they are running.

**Summary**

The purpose of embodiments of the present application is to provide a fixed-point method and apparatus for a neural network, so as to reduce the processing resources occupied by the neural network. Specifically, the technical solutions are as follows.

In a first aspect, an embodiment of the present application provides a fixed-point method for a neural network, the method includes:

performing at least one of the following low-bit quantizations on a neural network: performing a first low-bit quantization on input activation values of convolutional layers in the neural network, performing a second low-bit quantization on weights of convolution kernels of the convolutional layers in the neural network; for non-convolutional functional layers other than the convolutional layers in the neural network, performing a third low-bit quantization on input activation values of the non-convolutional functional layers;

retraining the current low-bit quantized neural network;

performing fixed-point processing based on each of low-bit quantization results in the retrained neural network;

loading the fixed-point neural network;

wherein the first low-bit, the second low-bit, and the third low-bit are within 1 to 8 bits.

In a second aspect, an embodiment of the present application provides a fixed-point apparatus for a neural network, the apparatus includes:

at least one of the following quantization modules for performing low-bit quantization on a neural network:

a convolutional layer input activation value quantization module, configured for performing a first low-bit quantization on input activation values of convolutional layers in the neural network;

a convolutional layer weight quantization module, configured for performing a second low-bit quantization on weights of convolution kernels of the convolutional layers in the neural network;

a non-convolutional functional layer input activation value quantization module, configured for performing a third low-bit quantization on input activation values of non-convolutional functional layers other than the convolutional layers in the neural network;

a retraining module, configured for retraining the current low-bit quantized neural network;

a fixed-point module, configured for performing fixed-point processing based on each of low-bit quantization results in the retrained neural network;

a loading module, configured for loading the fixed-point neural network;

wherein the first low-bit, the second low-bit, and the third low-bit are within 1 to 8 bits.

In a third aspect, an embodiment of the present application provide a computer device, including a processor and a machine-readable storage medium, the machine-readable storage medium stores machine-executable instructions executable by a processor, the processor is caused by the machine-executable instructions to implement the method provided by the first aspect of the embodiment of the present application.

In a fourth aspect, an embodiment of the present application provide a machine-readable storage medium storing machine-executable instructions, which when called and executed by a processor, cause the processor to implement the method provided by the first aspect of the embodiment of the present application.

In a fifth aspect, an embodiment of the present application provide a computer program product for implementing the method provided in the first aspect of the embodiment of the present application when being executed.

The embodiments of the present application enable the activation values and weights of convolution kernels in the final fixed-point neural network are represented by low-bit fixed-point, so that they can be easily transplanted into embedded platforms and application-specific integrated circuits; input activation values of the convolutional layer and/or weights of the convolution kernels are fixed-pointed into low bits, and the calculation amount and storage space are greatly compressed; the staged quantization method does not require layer-by-layer calculation or repeated calculation, and at the same time, it can ensure that the stage quantization performance error is low and can flexibly select parameters of the functional layer to be fixed-pointed according to the target performance requirements of the neural network. After the input activation values of each convolutional layer are quantized and the weights of each convolutional layer are quantized, the neural network is retrained, which avoids the accumulation of errors caused by the layer-by-layer training method, realizes end-to-end retraining, effectively reduces the error of the entire network, and ensures that the quantized network still has sufficient target performance.

## Brief Description of the Drawings

In order to more clearly describe the technical solution of the embodiments of the application and the prior art, drawings needed in the embodiments and the prior art will be briefly described below. Obviously, the drawings described below are for only some embodiments of the present application, one of ordinary skills in the art can also obtain other drawings based on these drawings without any creative efforts.

FIG. 1 is a schematic diagram of a hidden layer in a convolutional neural network model of the prior art.

FIG. 2a is a schematic flowchart of a part of a fixed-point method for convolutional neural network according to Embodiment 1 of the present application.

FIG. 2b is a schematic flowchart of another part of a fixed-point method for convolutional neural network according to Embodiment 1 of the present application.

FIG. 3 is a schematic diagram of weights of convolution kernels corresponding to respective output channels in convolutional layers according to an embodiment of the present application.

FIG. 4 is a schematic diagram of a relationship between related parameters in the quantization process of weights of convolution kernels according to an embodiment of the present application.

FIG. 5 is a schematic flowchart of a fixed-point method for convolutional neural network according to Embodiment 2 of the present application.

FIG. 6 is a schematic flowchart of a fixed-point method for convolutional neural network according to Embodiment 3 of the present application.

FIG. 7 is a schematic structural diagram of a fixed-point apparatus for neural network according to an embodiment of the present application.

FIG. 8 is a schematic flowchart of applying a low-bit fixed-point neural network to the object detection based on a vehicle-mounted camera according to an embodiment of the present application.

FIG. 9 is a schematic flowchart of applying a low-bit fixed-point neural network to image recognition based on access control camera according to an embodiment of the present application.

FIG. 10 is a schematic structure diagram of a computer device according to an embodiment of the present application.

## Detailed Description

In order to make objectives, technical solutions and advantages of the present application more apparent, the present application now will be described in detail with reference to the accompanying drawings and the detailed description. Obviously, the embodiments described are only some of the embodiments of the present application instead of all the embodiments. All further embodiments obtained by those of ordinary skills in the art based on the embodiments herein without any creative efforts are within the scope of the present application.

The present application provides a fixed-point computing method and apparatus for a neural network, through using a low bit fixed-point neural network, which solves the problem of occupying a lot of hardware resources caused by the use of floating-point arithmetic in the neural network.

For ease of understanding, the following takes the fixed-point processing on the convolutional neural network as an example for description. In view of the fact that even the same neural network model for business applications in various scenarios involves different parameter features, in order to illustrate the technical solution of the present application, the following description focuses on the neural network model itself.

The convolutional neural network model includes: an input layer, a hidden layer, and an output layer, wherein the input layer processes multi-dimensional training data. For example, in a convolutional neural network applied to machine vision, the input layer normalizes original pixel values distributed between 0 and 255 to improve the learning efficiency and performance of the convolutional neural network; the hidden layer is used to train the data of the input layer, and the output layer is used to output training results of the convolutional neural network model, for example, for image classification problems, the output layer uses a logistic function or a normalized exponential function (softmax function) to output classification labels.

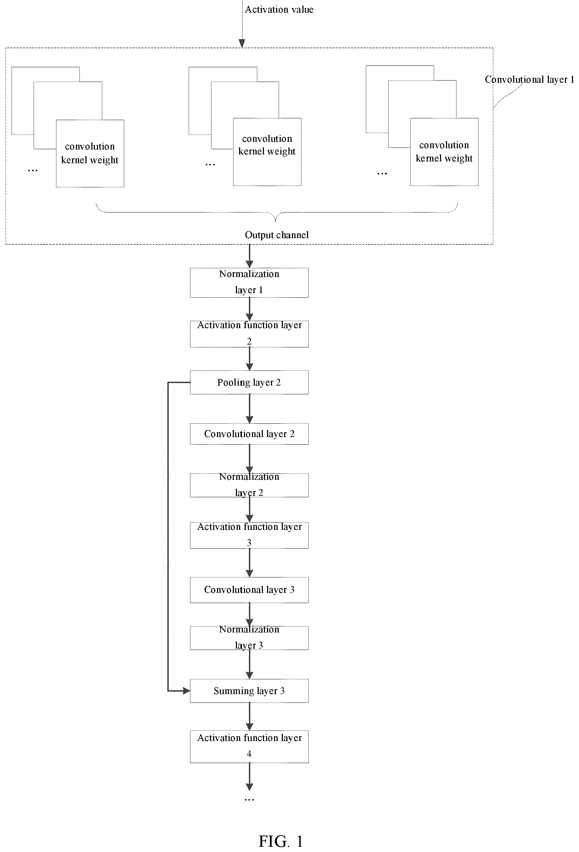

As shown in FIG. 1, FIG. 1 is a schematic diagram of a hidden layer in a convolutional neural network model. The hidden layer usually includes in order: convolutional layer 1 into which activation values of the previous activation function layer are input, normalization layer 1, activation function layer 2, pooling layer 2, convolutional layer 2, normalization layer 2, activation function layer 3, convolutional layer 3, normalization layer 3, summing layer 3, activation function layer 4, etc. In the same convolutional layer, at least one or more activation values input to the convolutional layer can obtain different output results through different convolution kernels, and an output result can be regarded as an output channel. It should be understood that the structure of the hidden layer is not limited to this. For example, the non-convolutional functional layers other than the convolutional layer, such as the pooling layer, the normalization layer, and the summing layer, can be designed according to the requirements. For example, the pooling layer 2 is output to the summing layer, but the convolutional layer is the core of the hidden layer. Therefore, the most time-consuming part of calculation in a convolutional neural network is the convolutional calculation. Reducing the calculation amount of this part can minimize the calculation amount of the entire network.

A fixed-point method for a neural network provided by an embodiment of the present application may include the following steps:

performing at least one of following low-bit quantizations on a neural network: performing a first low-bit quantization on input activation values of convolutional layers in the neural network, performing a second low-bit quantization on weights of convolution kernels of the convolutional layers in the neural network; for non-convolutional functional layers other than the convolutional layers in the neural network, performing a third low-bit quantization on input activation values of the non-convolutional functional layers;

retraining the current low-bit quantized neural network;

performing fixed-point processing based on each of low-bit quantization results in the retrained neural network;

loading the fixed-point neural network;

wherein the first low-bit, the second low-bit, and the third low-bit are within 1 to 8 bits.

The embodiments of the present application enable the activation values and weights of convolution kernels in the final fixed-point neural network are represented by low-bit fixed-point, so that they can be easily transplanted into embedded platforms and application-specific integrated circuits; input activation values of the convolutional layer and/or weights of the convolution kernels are fixed-pointed into low bits, and the calculation amount and storage space are greatly compressed; the staged quantization method does not require layer-by-layer calculation or repeated calculation, and at the same time, it can ensure that the stage quantization performance error is low and can flexibly select parameters of the functional layer to be fixed-pointed according to the target performance requirements of the neural network. After the input activation values of each convolutional layer are quantized and the weights of each convolutional layer are quantized, the neural network is retrained, which avoids the accumulation of errors caused by the layer-by-layer training method, realizes end-to-end retraining, effectively reduces the error of the entire network, and ensures that the quantized network still has sufficient target performance.

Embodiment 1

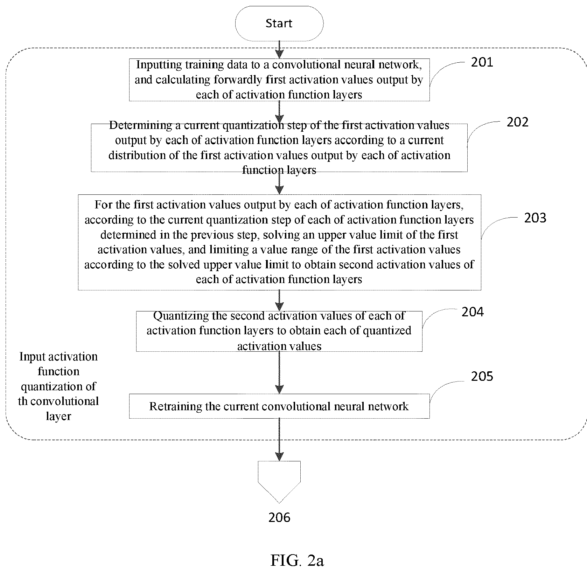

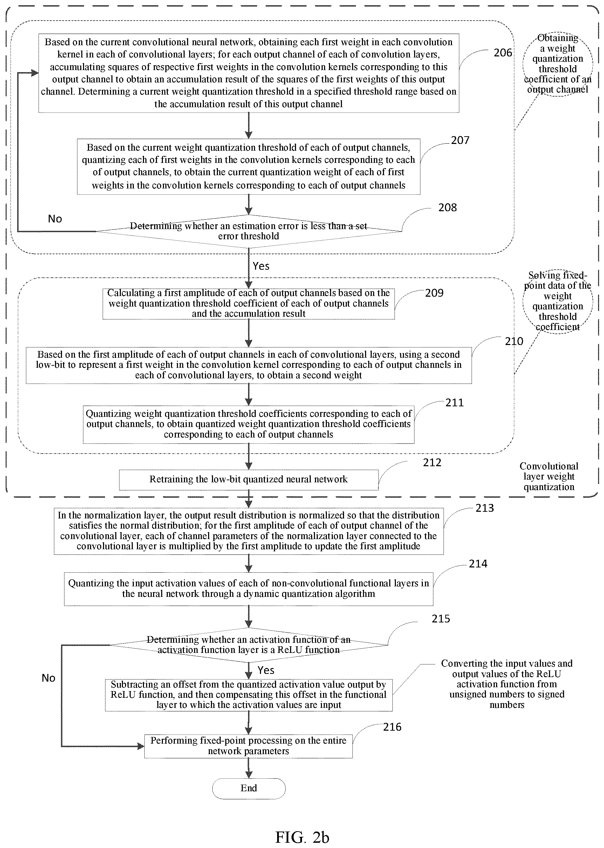

Referring to FIG. 2a and FIG. 2b, which are schematic flowcharts of a fixed-point method for convolutional neural network according to the embodiments of the present application.

Step 201, inputting training data to a convolutional neural network, and calculating forwardly first activation values output by each of activation function layers, that is, at least one activation value output by an activation function in an activation function layer, that is, each of activation values input to the convolutional layer.

Wherein, the first activation value is represented by floating-point data, and the parameters in the convolutional neural network are stored in floating-point data. One activation function layer has an activation function. The input of the activation function is a feature map. The size of the feature map is N*W*H, which is equivalent to N maps of W*H. Each pixel is equivalent to one activation value. Therefore, one activation function layer outputs at least one activation value.

Step 202: determining a current quantization step of the first activation values output by each of activation function layers according to a current distribution of the first activation values output by each of activation function layers.

In this step, for any activation function layer, the distribution of each of first activation values output by this activation function layer is analyzed to obtain the distribution of the first activation values, for example, the first activation values output by this activation function layer are sorted, and then a quantization step is selected according to a given proportional value as the current quantization step of the first activation values output by this activation function layer. Wherein, the given ratio is a hyperparameter, which is a set value. For example, if there are 1000 first activation values, the given ratio is set to 0.01, the result of the multiplication is 1000 * 0.01 = 10. After sorting the first activation values, an activation value at the position of index 10 can be taken as the quantization step.

For any activation function layer, a quantization step can also be found by searching, so as to minimize the quantization error of the first activation values output by this activation function layer. After sorting the first activation values above, the maximum value is taken as an initial search point, and then the search is performed according to a certain decreased interval. For example, the maximum value is 10, assuming that the search interval is 0.2, then the quantization step of the search is 10, 9.8, 9.6, 9.4... then a quantization step is selected according to the smallest quantization error.

In this way, the current quantization step of the floating-point number of the first activation values output by each of activation function layers can be obtained.

Step 203, for the first activation values output by each of activation function layers, according to the current quantization step of each of activation function layers determined in the previous step, solving an upper value limit of the first activation values, and limiting a value range of the first activation values according to the solved upper value limit to obtain second activation values of each of activation function layers.

In this step, for the first activation values output by any activation function layer, according to the floating-point quantization step calculation formula $s = \dfrac{\beta}{2^{b_a-1}-1}$ , the upper value limit $\beta$ of the first activation values output by this activation function layer can be obtained, wherein s is a current quantization step, the first number of bits used for quantization of the activation values is $b_a$, $b_a$ is low bit, that is, within 8 bits, and $b_a$ can be taken as 4 generally.

Each of first activation values is compared with the solved upper value limit, if a first activation value is greater than the upper value limit, this first activation value is taken as the upper value limit, otherwise, this first activation value is kept unchanged. Therefore, second activation values with a restricted value range of this activation function layer are obtained.

The mathematical expression is:

$$\beta_i = s_i \times (2^{b_{ai}-1} - 1)$$

wherein, the subscript i represents the activation function layer i, $\beta_i$ represents the upper value limit of the first activation values output by the activation function layer i, $s_i$ represents the current quantization step of the first activation values output by the activation function layer i, and $b_{ai}$ represents the number of quantization bits for the activation values output by the activation function layer i, and the number of quantization bits for each of activation function layers may be the same.

$$x_{fi} = \begin{cases} \beta_i, & \text{if } x_{fi} > \beta_i; \\ x_{fi}, & \text{if } x_{fi} \leq \beta_i; \end{cases}$$

Wherein, $x_{fi}$ represents second activation values output by the activation function layer i, and the second activation value is a floating-point number.

Step 204, quantizing the second activation values of each of activation function layers to obtain each of quantized activation values.

In this step, for the second activation values of any of activation function layers, according to the floating-point number quantization formula $\bar{x} = \text{floor}\left(\frac{x_f}{s} + 0.5\right)$, the quantized activation values are obtained, wherein the floor operation is to round the value, $x_f$ is the second activation value, the expression range of the fixed-point value of the $b_a$ bit is $[-2^{b_a-1}, 2^{b_a-1}-1]$, therefore, the quantified activation values are limited to this range.

The mathematical expression is:

$$\bar{x_i} = \text{floor}\left(\frac{x_{fi}}{s_i} + 0.5\right)$$

wherein, $\bar{x_i}$ represents the activation value of the activation function layer i after quantization, $x_{fi}$ is the second activation value of the activation function layer i.

Step 205, retraining the current convolutional neural network, wherein the activation values input by each of convolutional layers in the current convolutional neural network are the quantized activation values.

In this step, the upper value limit β of the activation values is used as a parameter that can be updated iteratively during training, and it is updated with the training of the entire network until it converges. In this way, the quantization step is also updated accordingly. The specific training process is to calculate a gradient through a loss function and update neural network parameters based on a gradient size. During the training process, the input training data and the activation values input to each of convolutional layers need to be quantified.

Step 206, based on the current convolutional neural network, obtaining each first weight in each convolution kernel in each of convolutional layer; for each output channel of each of convolution layers, accumulating squares of respective first weights of the convolution kernel corresponding to this output channel to obtain an accumulation result of the squares of the first weights of this output channel. Determining a current weight quantization threshold in a specified threshold range based on the accumulation result of this output channel. Wherein, the first weight is floating-point data.

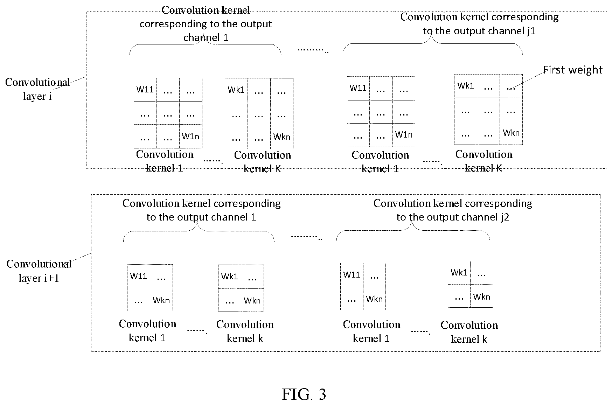

Referring to FIG. 3, FIG. 3 is a schematic diagram of weights of convolution kernels corresponding to each of output channels in a convolutional layer according to an embodiment of the present application. In the same convolutional layer, each output channel corresponds to *k* convolution kernels, each convolution kernel has the same size, and each convolution kernel has n first weights; the number of output channels, the number of convolution kernels, and the size of convolution kernels are different for different convolutional layers, for example, which are different between convolutional layer 1 and convolutional layer i, as shown in the figure.

In this step, for any output channel j of any convolutional layer i, the square of each first weight in each convolution kernel k corresponding to output channel j is calculated to obtain squares of each first weight in each convolution kernel corresponding to the output channel j, and the squares of all the first weights in all the convolution kernels corresponding to the output channel is accumulated to obtain the accumulation results of the output channel j;

wherein, the mathematical expression of the squares of all the first weights in all convolution kernels of the accumulated output channel j is:

$$L_{ij} = \sum_{k=1}^{k} \sum_{n=1}^{n} w_{fijkn}^2$$

wherein, $L_{ij}$ represents the accumulation results of the output channel j of the convolutional layer i, $w_{fijkn}$ is the n-th first weight in the convolution kernel k corresponding to the output channel j in the convolution layer i.

Based on the accumulation result $L_{ij}$ of the output channel of the convolution layer, a quantization threshold is searched in the specified threshold range as the current weight quantization threshold of the output channel j of the convolution layer i. The search process is to first design a specified range, such as -0.5~0.5, and then search according to a fixed search interval. For example, if the search interval is 0.02, the quantization threshold obtained by searching can be -0.5, -0.48, -0.46, -0.44 ....0.48, 0.5.

Through this step, the current weight quantization threshold of each output channel in each of convolutional layers can be obtained.

Step 207, based on the current weight quantization threshold of each of output channels, quantizing each of first weights in the convolution kernels corresponding to each of output channels, to obtain the current quantization weight of each of first weights in the convolution kernel corresponding to each of output channels.

In this step, for any convolutional layer i, multiplying the accumulation result of the output channel j of the convolutional layer by the current weight quantization threshold of the output channel, as the current amplitude of the output channel; comparing each of first weights in the convolution kernel corresponding to the output channel with the current amplitude, if a first weight is greater than the current amplitude, the first weight is assigned as the current amplitude, and if a first weight is less than the negative number of the current amplitude, the first weight is assigned as the negative number of the current amplitude, and the first weight between the negative number of the current amplitude and the current amplitude is assigned as 0, so that the current quantization weight of the output channel can be obtained.

The mathematical expression is:

$$\lambda_{ij} = L_{ij} \times t_{ij}$$

wherein, $t_{ij}$ is the current weight quantization threshold of the output channel j in the convolutional layer i, $\lambda_{ij}$ is the current amplitude of the output channel j in the convolutional layer i;

$$\overline{w}_{fijkn} = \begin{cases} \lambda_{ij}, & \text{if } w_{fijkn} > \lambda_{ij}; \\ -\lambda_{ij}, & \text{if } w_{fijkn} < -\lambda_{ij}; \\ 0, & \text{if } \lambda_{ij} \leqslant w_{fijkn} \leqslant -\lambda_{ij} \end{cases}$$

wherein, $\overline{w}_{fijkn}$ is the current quantization weight of the n-th first weight of the convolution kernel k corresponding to the output channel j in the convolutional layer i, and $w_{fijkn}$ is the n-th first weight of the convolution kernel k corresponding to the output channel j in the convolutional layer i.

Step 208, determining whether an estimation error is less than a set error threshold.

The estimation error of the channel is determined according to an error between the current quantization weight of each of first weights of the output channel and the first weight. If the estimation error is greater than the set error threshold, it indicates that the current quantization threshold of the output channel does not meet the requirements, research the quantization threshold as the current weight quantization threshold of the output channel, and return to step 206 until the estimation error is less than the set error threshold, and the current weight quantization threshold corresponding to the estimation error is used as the weight quantization threshold coefficient.

In this step, the estimation error may be an average error or accumulation error between the current quantization weight of the first weight of the output channel and the first weight, that is, the average error or accumulation error between the current quantization weight of all first weights of the output channel j and all first weights, which can be mathematically expressed as:

$$\text{Accumulation error} = \sum_{k=1}^{k} \sum_{n=1}^{n} \left( \overline{w}_{fijkn} - w_{fijkn} \right),$$

or

$$\text{Average error} = \frac{\sum_{k=1}^{k} \sum_{n=1}^{n} \left( \overline{w}_{fijkn} - w_{fijkn} \right)}{k \times n}$$

Through steps 207-208, the weight quantization threshold coefficient of each output channel in each convolutional layer can be obtained.

Step 209: calculating a first amplitude of each of output channels based on the weight quantization threshold coefficient of each of output channels and the accumulation result.

In this step, for any convolution layer i, multiplying the accumulation result of the output channel j of the convolution layer by the weight quantization threshold coefficient of the output channel, as the first amplitude of the output channel;

The mathematical expression is:

$$\alpha_{ij} = L_{ij} \times T_{ij}$$

wherein, $T_{ij}$ is the weight quantization threshold coefficient of the output channel j in the convolutional layer i, $\alpha_{ij}$ is the first amplitude of the output channel j in the convolutional layer i.

Step 210, based on the first amplitude of each of output channels in each of convolutional layers, using the second low-bit to represent a first weight in the convolution kernel corresponding to each of output channels in each of convolutional layers, to obtain a second weight. That is, performing a second low-bit quantization on each first weight, to perform fixed-point processing on the first weight.

In order to ensure the target performance of the convolutional neural network, the low-bit quantization method is selected according to the sensitivity to the change of the target performance of the convolutional neural network caused by the low-bit quantization. If the target performance drops little, it indicates that the convolutional layer is not sensitive; if the target performance degrades a lot when performing the low-bit quantization, it indicates that the convolutional layer is very sensitive.

A neural network corresponds to a task, and this task has a test program, which will output a performance for a given model, so to obtain the degradation of the target performance, such a test program is required.

To specifically identify whether a convolutional layer is sensitive, the current processing method is mainly: there is an unquantized neural network, there are many convolutional layers. First, only parameters of the first convolutional layer are quantized while other convolution layers are not quantized, so a first model is obtained, which is tested by the test program to obtain performance 1; then only parameters of the second convolutional layer are quantized while other convolutional layers including the first convolutional layer are not quantized, so a second model is obtained, which is tested by the test program to obtain performance 2; by analogy, a performance will be obtained for each convolution layer. Comparing with each other, it will be found that some convolutional layers will cause a lot of performance drop after being quantized separately. Such layers are called sensitive layers.

For an insensitive convolutional layer, a second low-bit is used to express the first weight. Specifically, the first amplitude of the output channel is multiplied by the weight quantization threshold coefficient expressed by the second low-bit; wherein, the weight quantization threshold coefficient expressed by the low-bit is the fixed-point value expressed by the low-bit of $b_w$, which is T1, the value range of T1 is $[-2^{bw-1}, 2^{bw-1}-1]$, for example, when the low-bit $b_w$ is 2, the value range of T1 is [-2, 1]. In this way, for the low-bit representation of the n-th first weight $w_{fijkn}$ in the convolution kernel k corresponding to the output channel j in the convolutional layer i, that is, the second weight $w_{ijkn}$ is:

$$w_{ijkn} = \alpha_{ij} T1_{ij}$$

wherein, $\alpha_i$ is the first amplitude of the output channel j in the convolution layer i; $T1_{ij}$ is the low-bit representation of the weight quantization threshold coefficient of the output channel j in the convolution layer i, that is, the fixed-point weight quantization threshold coefficient; $w_{ijkn}$ is the fixed-point data.

For a sensitive convolutional layer, a combination of at least two second low-bit bases is used to express the floating-point weights of the convolutional layer. Specifically, at least two output channels in the convolutional layer are used as combined output channels, the weight quantization threshold coefficient of the shown combined output channel is the combined weight quantization threshold coefficient, the first amplitudes of the at least two combined output channels are multiplied by at least two combined weight quantization threshold coefficients, and all multiplied results are summed; wherein, the combined weight quantization threshold coefficient is expressed by a combination of at least two second low-bit bases, which are the fixed-point values of T1, T2, ...Tm, wherein m is the number of second low bit bases in the combination, and the value range of the quantization threshold coefficient of each of combination weights is [$-2^{b_w-1}$, $2^{b_w-1}-1$]. For example, when the second low-bit $b_w$ is 2, the value range of each combined weight quantization threshold coefficient is [-2 , 1], for example, each combined weight quantization threshold coefficient can be three numbers of -1, 0, 1, then, m is 3. For the low-bit representation of the n-th first weight $w_{fijkn}$ in the convolution kernel k corresponding to the output channel j in the convolutional layer i, that is, the second weight $w_{ijkn}$ is:

$$w_{ijkn}=\alpha_{i1}T1_{ij}+\ldots+\alpha_{im}Tm_{ij}$$

wherein, $\alpha_{im}$ is the first amplitude of the m-th combined output channel in the J output channels in the convolution layer i; $Tm_{ij}$ is the combined weight quantization threshold coefficient of the output channel j in the convolution layer i expressed by the m-th combined low-bit base in the combination of at least two low-bit bases, that is, the combined weight quantization threshold coefficient after the combination of at least two low-bit bases is fixed-point; m is the number of the second low-bit bases in the combination, less than or equal to J; J is the total number of output channels in the convolutional layer i; $w_{ijkn}$ is fixed-point data.

Step 211: quantizing weight quantization threshold coefficients corresponding to each of output channels, to obtain quantized weight quantization threshold coefficients corresponding to each of output channels. That is, coefficient quantization values.

In this step, for the insensitive convolution layer, for any output channel j, each of second weights in the convolution kernel corresponding to the output channel are compared with the first amplitude, when it is greater than the first amplitude, then the first coefficient quantization value of the weight quantization threshold coefficient of the output channel is the fixed-point weight quantization threshold coefficient itself; when it is less than the negative number of the first amplitude, then the first coefficient quantization value of the weight quantization threshold coefficient of the output channel is the negative number of the fixed-point weight quantization threshold coefficient; when it is between the negative number of the first amplitude and the first amplitude, then the weight quantization threshold coefficient of the output channel is assigned as 0, thereby obtaining the first coefficient quantization value of the weight quantization threshold coefficient corresponding to the output channel.

The mathematical expression is:

$$\overline{T1_{ij}}=\begin{cases} T1_{ij}, & \text{if } w_{ijkn}>\alpha_{ij}; \\ -T1_{ij}, & \text{if } w_{ijkn}<-\alpha_{ij}; \\ 0, & \text{if } \alpha_{ij}\leq w_{ijkn}\leq-\alpha_{ij}; \end{cases}$$

wherein, $w_{ijkn}$ is the n-th second weight in the convolution kernel k corresponding to the output channel j in the convolutional layer i, $\overline{T_{ij}}$ is the first coefficient quantization value of the weight quantization threshold coefficient of the output channel j in the convolutional layer i, that is, the first coefficient quantization value of the output channel j.

For a sensitive convolutional layer, for any combined output channel m in any convolutional layer, the result of multiplying the first amplitude of the combined output channel by the combined weight quantization threshold coefficient of the combined output channel is taken as the second amplitude, the second amplitude is compared with the second weight, if the second weight is greater than the second amplitude, the combined weight quantization threshold coefficient is used as the second coefficient quantization value, if the second weight is less than the negative number of the second amplitude, the negative number of the combined weight quantization threshold coefficient is used as the second coefficient quantization value, if the second weight is between the negative number of the second amplitude and the second amplitude, 0 is used as the second coefficient quantization value, so as to obtain the second coefficient quantization value of the combined weight quantization threshold coefficient corresponding to the combined output channel.

The mathematical expression is:

$$\overline{Tm_{ij}} = \begin{cases} Tm_{ij}, & \text{if } w_{ijkn} > \alpha_{im}Tm_{ij}; \\ -Tm_{ij}, & \text{if } w_{ijkn} < -\alpha_{im}Tm_{ij}; \\ 0, & \text{if } \alpha_{im}Tm_{ij} \leq w_{ijkn} \leq -\alpha_{im}Tm_{ij}; \end{cases}$$

wherein, $w_{ijkn}$ is the n-th second weight in the convolution kernel k corresponding to the output channel j in the convolutional layer i, $\overline{Tm_{ij}}$ is the second coefficient quantization value of the combined weight quantization threshold coefficient of the m-th combined output channel in J output channels of the convolutional layer i, that is, the second coefficient quantization value of the output channel m.

For example, if the value range of the combined weight quantization threshold coefficient is -1, 0, and 1, the second coefficient quantization value for any combined weight quantization threshold coefficient m is:

$$\overline{Tm_{ij}} = \begin{cases} 1, & \text{if } w_{ijkn} > \alpha_{im}Tm_{ij}; \\ -1, & \text{if } w_{ijkn} < -\alpha_{im}Tm_{ij}; \\ 0, & \text{if } \alpha_{im}Tm_{ij} \leq w_{ijkn} \leq -\alpha_{im}Tm_{ij}; \end{cases}$$

step 212, retraining the low-bit quantized neural network

A weight of each of output channels is calculated according to the coefficient quantization value of the weight quantization threshold coefficient and the first amplitude of each of output channels to obtain a first quantization weight, and each of first quantization weights of each of output channels is input into the convolutional neural network for retraining.

In this step, for the insensitive convolutional layer, the first quantization weight of the n-th first weight in the convolution kernel k corresponding to the output channel j in the convolutional layer i is: the product of the first amplitude of the output channel j in the convolution layer i and the first coefficient quantization value; the mathematical formula is expressed as:

$$\overline{w_{ijkn}} = \alpha_{ij}\overline{T1_{ij}}$$

wherein, $\overline{w_{ijkn}}$ is the first quantization weight of the n-th first weight in the convolution kernel k corresponding to the output channel j in the convolution layer i, which means that for the insensitive convolution layer, the first quantization weights of each of first weights in the convolution kernel corresponding to the same output channel are the same.

For the sensitive convolutional layer, the first quantization weight of the n-th first weight in the convolution kernel k corresponding to the output channel j in the convolutional layer i is: the sum of the product of the first amplitude of each of combined output channels and the second coefficient quantization value of its combined output channel; the mathematical formula is expressed as:

$$\overline{w_{ijkn}} = \alpha_{i1}\overline{T1_{ij}} + \ldots + \alpha_{im}\overline{Tm_{ij}}$$

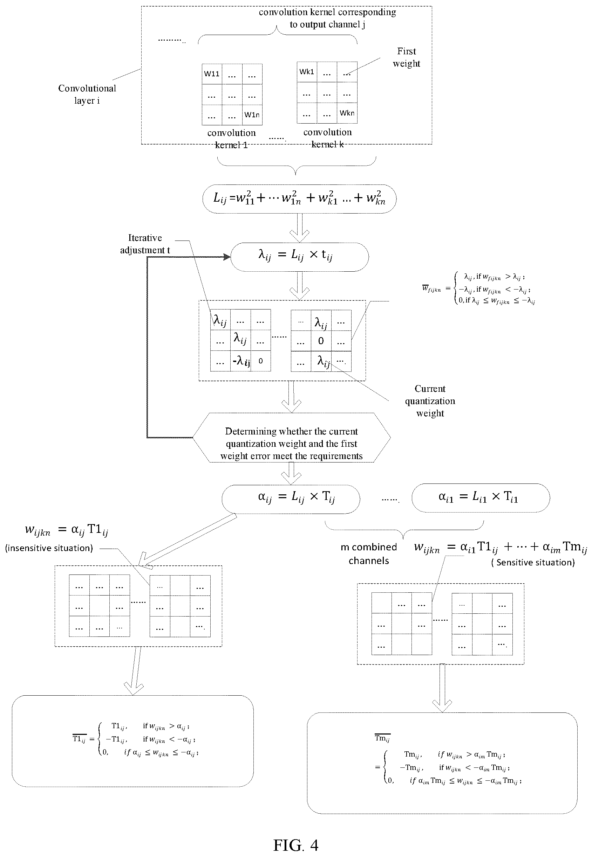

Through steps 209 to 212, the weights originally stored as 32 bits are quantized into $b_w$ bits. The data relationship in this process can be referred to as shown in FIG. 4, which is a schematic diagram of the relationship between relevant parameters in the quantization process of weights of convolution kernels according to the embodiment of the present application.

Step 213, in the normalization layer, the output result distribution is normalized so that the distribution satisfies the normal distribution; for the first amplitude of each of output channel of the convolutional layer, each of channel parameters of the normalization layer connected to the convolutional layer is multiplied by the first amplitude to update the first amplitude.

In a classic neural network, the normalization operation is performed after the convolutional layer, that is, output result data of each of output channels of the convolutional layer is normalized to a distribution whose mean is 0 or whose variance is 1, so that the distribution satisfies the normal distribution. Since the parameters of the normalization layer are also independent of each of output channels, in this application, each of channel parameters of the normalization layer are multiplied by the first amplitude of each of output channels of the convolutional layer connected to the normalization layer.

For the insensitive convolutional layer, the first amplitude of the output channel is multiplied by the channel parameter of the channel corresponding to the normalization layer to obtain the updated first amplitude. The above-mentioned updated first amplitude is expressed by the mathematical formula as:

$$\alpha_{ij} \equiv \alpha_{ij} \times \sigma_{ij}$$

Wherein, $\sigma_{ij}$ is the channel parameter of channel j in the normalization layer i connected to the convolutional layer i, the above formula represents that the parameter of the normalization layer channel j connected to the output of the convolutional layer i is multiplied by the first amplitude of the output channel j of the convolutional layer i, and the first amplitude is updated with the multiplication result.

For the sensitive convolutional layer, the first amplitude of each combined output channel in the output channel is respectively multiplied by the channel parameter of the channel corresponding to the normalization layer to obtain the updated first amplitude of the combined output channel. The above-mentioned updated first amplitude is expressed by the mathematical formula as:

$$\alpha_{im} \equiv \alpha_{im} \times \sigma_{im}$$

wherein, $\sigma_{im}$ represents the channel parameter corresponding to the combined output channel m in the convolutional layer i in the normalization layer i; the above formula is expressed as: the first amplitude of each combined output channel in the output channel J of the convolutional layer i, is multiplied by the channel parameter corresponding to the combined output channel in the normalization layer i connected to the output of the convolutional layer i, and the first amplitude of the combined output channel is updated with the multiplication result.

The normalization parameter fusion performed in this step causes the first amplitude to be updated so as to remove the influence of the normalization operation on the network performance.

Step 214, quantizing the input activation values of each of the non-convolutional functional layers in the neural network through a dynamic quantization algorithm.

The previous step solved the convolutional layer operation that consumes the most storage space and calculation amount, the convolutional operation between the $b_a$ bit activation value and the $b_w$ bit weight. In the neural network, in addition to the convolutional layer, there is an summing layer, a pooling layer and other non-convolutional functional layers, these non-convolutional functional layers take up very little calculation compared to convolutional layer operation. In order to ensure the accuracy of these parts, when their output activation value is not used as the input of the convolutional layer, the third low-bit is used to quantize to a higher precision. Generally, the third low-bit is 8 bits, and if it is used as the input of the convolutional layer, it is quantized to the first low-bit $b_a$.

The quantization process is the same as the quantization process of the activation values in steps 202-204. Specifically:

when first activation values input by each of convolutional layers is calculated forwardly, third activation values input by each of the non-convolutional function layers can also be calculated;

For each of third activation values input by any non-convolutional functional layer, the following steps are performed:

according to the distribution of each of third activation values of this non-convolution functional layer, determining a current quantization step, for example, sorting each of third activation values, and then selecting the current quantization step according to a given proportional value, or, searching a quantization step that minimizes the quantization error of the third activation values as the current quantization step;

according to the current quantization step and the third low-bit, calculating an upper value limit for limiting a value range of quantization activation values of this non-convolutional functional layer. In this step, the floating-point quantization step calculation formula is used to obtain the upper value limit; the calculation formula of floating-point quantization step is:

$$\eta_i = r_i \times (2^{b_{pi}-1} - 1)$$

wherein, $\eta_i$ is the upper value limit of the third activation values of the non-convolution function layer i, $r_i$ is the current quantization step of the third activation values of the non-convolutional functional layer i, $b_{pi}$ is the third low-bit,

according to the upper value limit and each of third activation values of the non-convolutional functional layer, setting each quantization activation value of the non-convolutional functional layer to obtain each of fourth activation values of the non-convolutional functional layer; in the step, comparing a third activation value with the upper value limit;

if the third activation value is greater than the upper value limit, assigning the upper value limit to the quantization activation value as the fourth activation value; if the third activation value is less than or equal to the upper value limit, setting the third activation value to the quantization activation value as the fourth activation value; the mathematical formula is expressed as:

$$y_{fi}=\begin{cases} \eta_i, & \text{if } y_{fi} > \eta_i; \\ y_{fi}, & \text{if } y_{fi} \leq \eta_i; \end{cases}$$

quantizing the fourth activation values of this non-convolutional functional layer to obtain the quantized activation values of this non-convolutional functional layer; in this step, quantizing the fourth activation values according to the floating-point quantization formula, and the floating-point quantization formula is:

$$\overline{y_i}=\text{floor}\left(\frac{y_{fi}}{r_i}+0.5\right)$$

wherein, $\overline{y_i}$ represents the quantized activation value of the non-convolutional functional layer i, $y_{fi}$ is the third activation value of the non-convolutional functional layer i, $r_i$ is the current quantization step of the third activation value of the non-convolutional functional layer i, and floor operation means that the value is rounded up.

Step 215, determining whether the activation function of the activation function layer in the neural network is a ReLU (Rectified Linear Unit) function.

After all the quantization is done, it is determined whether each activation function is a ReLU function for each activation function layer in the neural network. If the activation function of a certain activation function layer is ReLU, an offset is subtracted from the quantized activation value output by ReLU activation function of the activation function layer as a whole, and then this offset is compensated in the convolutional layer or other functional layers to which the activation values are input, and then step 216 is executed; Otherwise, step 216 is directly executed.

Specifically, since the value range of the data input by the ReLU function to the convolutional layer is a low-bit unsigned number, for example, when it is the first low-bit number $b_a$=4 for activation value quantization, due to the output characteristics of the ReLU function, the value range of the fixed-point value is [0, $2^{b_a}$-1]=[0, 15], in order to transplant to the hardware platform more effectively, the low-bit unsigned number is converted into the low-bit signed number, that is, an offset is determined so that the quantized activation value output by the ReLU function is converted from an unsigned number into a signed number, and can be expressed by the first low-bit signed number, and the input value input to the ReLU function is data shifted according to the offset. For example, the input value of each ReLU function is subtracted by 8 when $b_a$=4, so that the value range becomes [-8 , 7]. According to the output characteristics of the ReLU function, the output value of the ReLU function will also be subtracted by 8, which ensures that the 4-bit signed number is used to save these data; in order to avoid the influence of the ReLU function taking the signed value to 0, then delete each of ReLU function layers, and compensate the offset in the next layer of the deleted ReLU function layer, for example, when the next layer is a convolutional layer, the offset can be added to bias data of the convolutional layer; when the next layer is an additive layer, the offset can be added to a preset value of the layer.

In this step, the input value and output value of the ReLU activation function are converted from unsigned numbers to signed numbers, and the offsets generated from unsigned numbers to signed numbers are compensated in the next layer, so that the resource consumption of unsigned numbers can be effectively reduced during migration and deployment.

In step 216, performing fixed-point processing for entire network parameters.

In this step, the low-bit quantization value transmitted between each of functional layers in the neural network is converted into a fixed-point value, specifically, any low-bit quantization value obtained in the above steps is converted into fixed-point values for storing, the low-bit quantization value obtained in the above steps includes the following: the input activation value after quantization of each of convolutional layers, the first amplitude of the output channel of the sensitive convolutional layer (after the normalization layer fusion parameter is updated), and the first coefficient quantization value of the weight quantization threshold coefficient, the first amplitude of the combined output channel selected from the output channel of each of insensitive convolutional layers (after the normalization layer fusion parameter is updated), and the second coefficient quantization value of the combined weight quantization threshold coefficient, the input activation value after quantization of non-convolutional functional layer, the signed number of the input value and/or output value of the activation function layer whose activation function is ReLU, the input value and/or output value after quantization of the deleted ReLU activation function layer, the value of the offset of the activation function layer whose activation function is ReLU quantized by low-bit, thus, the low-bit quantized values transmitted between layers in the current neural network are converted into fixed-point values, and the fixed-point processing of the entire network parameters is realized.

Through the above steps, the floating-point value can be represented by a quantization value multiplied by a quantization step, then the process of parameter fixed-point is to express the original floating-point value as its corresponding quantization value, and store the quantization step correspondingly. When the model is applied, a certain value participates in the convolution operation, such as calculating $wi \times fi$, where $fi$ is the input activation value, expressed as $xi \times \beta i$, and $wi$ in the model is expressed as its quantization value $yi$, then the quantization step $ri$ corresponding to $wi$ is found in the corresponding storage position, the actual process of calculating $wi \times fi$ is $yi \times xi \times ri \times \beta i$.

In the above steps 205 and 212, after the input activation values of convolutional layer are quantized and the weights of the convolutional layer are quantized, the neural network is retrained respectively, because, for the convolutional layer, it can be understood that the activation value is multiplied by the weight of the convolution kernel, because the activation value is quantized, for example, the value a is quantized from 1.2 to 1, when b is multiplied by a after quantization is inconsistent with the result before quantization, so it is necessary to slowly update and change the values of a and b through retraining, so that the multiplication result of a and b is close to the result before quantization, which is conducive to ensuring the target performance of the neural network. It should be understood that retraining can also be performed after the input activation values of the convolutional layers is quantized or the weights of the convolutional layers are quantized. For example, step 205 may not be performed, but only step 212 may be performed, so as to perform retraining only during step 212; alternatively, step 205 may be performed without step 212 being performed.

The embodiments of the present application enable the activation values and weights of the convolution kernels in the final fixed-point neural network are represented by low-bit fixed-point, so that they can be easily transplanted into embedded platforms and application-specific integrated circuits; input activation values of the convolutional layer and/or weights of the convolution kernels are fixed-pointed into low bits, and the calculation amount and storage space are greatly compressed; for the weights of the quantization-sensitive convolutional layers, more computation is allocated, and less computation is allocated for the insensitive layers, which realizes the non-uniform quantization of the weights of the convolution kernels, which can effectively reduce the network quantization performance error and improve the target performance of the neural network. The staged quantization method does not require layer-by-layer calculation or repeated calculation, and at the same time, it can ensure low quantization performance errors in the two stages of activation values and the weights of the convolution kernels and can flexibly select parameters of the functional layer to be fixed-pointed according to the target performance requirements of the neural network; in the fixed-point process, for the ReLU activation function, its range is converted from unsigned to signed, and the offset generated by the change from unsigned to signed is compensated in the next functional layer, which is conducive to effectively reducing the resource consumption of unsigned number during migration and deployment. After the input activation values of each convolutional layer are quantized and the weights of each convolutional layer are quantized, the neural network is retrained, which avoids the accumulation of errors caused by the layer-by-layer training method, realizes end-to-end retraining, effectively reduces the error of the entire network, and ensures that the quantized network still has sufficient target performance.

To sum up, the neural network fixed-point in this embodiment of the present application mainly includes the following four processes.

First: quantizing the activation values (the weights of the convolutional neural network are not quantized), and retraining the quantized activation values to obtain the trained convolutional neural network.

Second: quantizing the weights of the convolutional neural network that is retrained after the activation values are quantized, and retraining the convolutional neural network after the weights are quantized.

Third: quantizing the activation values of the non-convolutional functional layers in the retrained convolutional neural network after quantizing the weights.

Fourth: performing fixed-point processing on entire network parameters to obtain the final convolutional neural network.

Embodiment 2

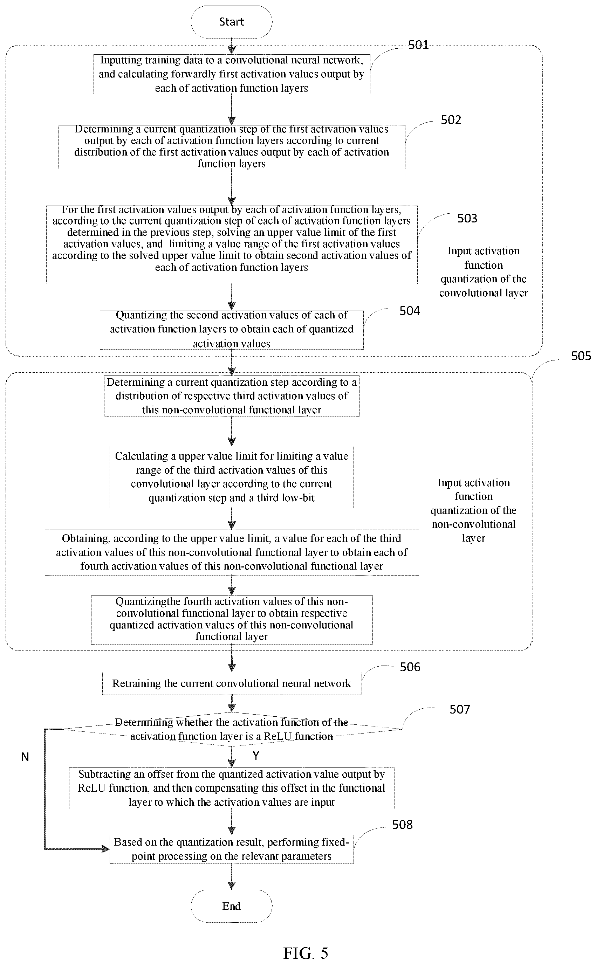

Referring to FIG. 5, which is a schematic flowchart of a fixed-point method for convolutional neural network according to Embodiment 2 of the present application. In this embodiment, the input activation values of the convolutional layer is quantized with the first low-bit, and further, the input activation values of the non-convolutional functional layer other than the convolutional layer is quantized with the third low-bit. Specifically, it includes the following steps.

Step 501, inputting training data to a convolutional neural network, and calculating forwardly first activation values output by each of activation function layers, that is, at least one activation value output by the activation function in the activation function layer, that is, each of activation values of an input convolutional layer.

Wherein, the first activation value is represented by floating-point data, and the parameters in the convolutional neural network are stored in floating-point data.

Step 502: determining a current quantization step of the first activation values output by each of activation function layers according to current distribution of the first activation values output by each of activation function layers.

In this step, for any activation function layer, the distribution of each of first activation values output by the activation function layer is analyzed to obtain the first activation value distribution, for example, the first activation values output by the activation function layer are sorted, and then a quantization step is selected according to a given proportional value as a current quantization step of the first activation values output by the activation function layer.

For any activation function layer, a quantization step can also be found by searching, so as to minimize the quantization error of the first activation values output by the activation function layer.

In this way, the current quantization step of the floating-point number of the first activation values output by each of activation function layers can be obtained.

Step 503, for the first activation values output by each of activation function layers, according to the current quantization step of each of activation function layers determined in the previous step, solving an upper value limit of the first activation values, and limiting a value range of first activation values according to the solved upper value limit to obtain second activation values of each of activation function layers.

In this step, for the first activation values output by any activation function layer, according to the floating-point quantization step calculation formula $s = \dfrac{\beta}{2^{b_a-1}-1}$, the upper value limit $\beta$ of the first activation values output by the activation function layer can be obtained, wherein s is a current quantization step, the first number of bits used for quantization of the activation value is $b_a$, $b_a$ is low bit, that is, within 8 bits, and $b_a$ can be taken as 4 generally.

Each of first activation values is compared with the solved upper value limit, if the first activation value is greater than the upper value limit, the first activation value is taken as the upper value limit, otherwise, the first activation value is kept unchanged. Therefore, second activation values with a restricted value range of the activation function layer are obtained.

The mathematical expression is:

$$\beta_i = s_i \times (2^{b_{ai}-1}-1)$$

wherein, the subscript i represents the activation function layer i, $\beta_i$ represents the upper value limit of the first activation values output by the activation function layer i, $s_i$ represents the current quantization step of the first activation values output by the activation function layer i, and $b_{ai}$ represents the number of quantization bits for the activation values output by the activation function layer i, and the number of quantization bits for each of activation function layers may be the same.

$$x_{fi} = \begin{cases} \beta_i, & \text{if } x_{fi} > \beta_i; \\ x_{fi}, & \text{if } x_{fi} \leq \beta_i; \end{cases}$$

Wherein, $x_{fi}$ represents second activation values output by the activation function layer i, and the second activation value is a floating-point number.

Step 504, quantizing the second activation values of each of activation function layers to obtain each of quantized activation values.

In this step, for the second activation values of any of activation function layers, according to the floating-point number quantization formula $\overline{x} = \text{floor} \left( \dfrac{x_f}{s} + 0.5 \right)$, the quantized activation value is obtained, wherein the floor operation is to round the value, $x_f$ is the second activation value, the expression range of the fixed-point value of the $b_a$ bit is $[-2^{b_a-1}, 2^{b_a-1}-1]$, therefore, the quantified activation value is limited with this range.

The mathematical expression is:

$$\overline{x_i} = \text{floor} \left( \dfrac{x_{fi}}{s_i} + 0.5 \right)$$

wherein, $\overline{x_i}$ represents the activation value of the activation function layer i after quantization, $x_{fi}$ is the second activation value of the activation function layer i.

Step 505, forwardly calculating the third activation values input to each of the non-convolutional functional layers, and quantizing the third activation values of each of the non-convolutional functional layers in the neural network through a dynamic quantization algorithm.

Wherein, the third activation value is represented by floating-point data, and the parameters in the convolutional neural network are stored in floating-point data.

In the neural network, in addition to the convolutional layer, there are non-convolutional functional layers such as an summing layer, a pooling layer, etc., these non-convolutional functional layers take up very little calculation compared to convolutional layer operation. In order to ensure the accuracy of these parts, when their output activation values are not used as the input of the convolutional layer, the third low-bit is used to quantize to a higher precision. Generally, the third low-bit is 8 bits, and when their output activation values are used as the input of the convolutional layer, they are quantized with the first low-bit $b_a$.

The quantization process is the same as the quantization process of the activation values in steps 502-504. Specifically:

For each of third activation values input by any non-convolutional functional layer, the following steps are performed:

according to the distribution of each of third activation values of the non-convolution functional layer, determining the current quantization step, for example, sorting each of third activation values, and then selecting the current quantization step according to a given proportional value, or, searching a quantization step that minimizes the quantization error of the third activation value as the current quantization step;

according to the current quantization step and the third low-bit, calculating the upper value limit for limiting the value range of the third activation value of this non-convolutional functional layer. In this step, the floating-point quantization step calculation formula is used to obtain the upper value limit; the calculation formula of floating-point quantization step is:

$$\eta_i = r_i \times (2^{b_{pi}-1} - 1)$$

wherein, $\eta_i$ is the upper value limit of the third activation values of the non-convolution function layer i, $r_i$ is the current quantization step of the third activation values of the non-convolutional functional layer i, $b_{pi}$ is the third low-bit.

According to the upper value limit, setting each third activation value of this non-convolutional functional layer to obtain each of fourth activation values of this non-convolutional functional layer; in the step, comparing the third activation value with the upper value limit; if the third activation value is greater than the upper value limit, assigning the upper value limit to the third activation value as the fourth activation value; if the third activation value is less than or equal to the upper value limit, keeping the third activation value unchanged as the fourth activation value; the mathematical formula is expressed as:

$$y_{fi} = \begin{cases} \eta_i, & \text{if } y_{fi} > \eta_i; \\ y_{fi}, & \text{if } y_{fi} \leq \eta_i; \end{cases}$$

quantizing the fourth activation values of the non-convolutional functional layer to obtain the quantized activation values of the non-convolutional functional layer; in this step, quantizing the fourth activation values according to the floating-point quantization formula, and the floating-point quantization formula is:

$$\overline{y_i} = \text{floor} \left( \frac{y_{fi}}{r_i} + 0.5 \right)$$

wherein, $\overline{y_i}$ represents the quantized activation value of the non-convolutional functional layer i, $y_{fi}$ is the third activation value of the non-convolutional functional layer i, $r_i$ is the current quantization step of the third activation values of the non-convolutional functional layer i, and floor operation means that the value is rounded up.

Step 506, retraining the current convolutional neural network, wherein the activation values input by each of functional layers in the current convolutional neural network are the quantized activation values.

In this step, the upper value limits $\beta$ and $\eta$ of the activation values are used as parameters that can be updated iteratively during training, and they are updated with the training of the entire network until they converge. In this way, the quantization steps s, r are also updated accordingly.

Step 507, determining whether an activation function of an activation function layer in the neural network is a ReLU function.

If the activation function of an activation function layer is ReLU, the quantized activation value output by the activation function layer ReLU activation function is subtracted by an offset as a whole, and then this offset is compensated in the convolutional layer or other functional layers to which the activation values are input, and then step 508 is executed; Otherwise, step 508 is directly executed.

Specifically, since the value range of the data input by the ReLU function to the convolutional layer is a low-bit unsigned number, for example, when it is the first low-bit number $b_a$=4 for activation value quantization, due to the output characteristics of the ReLU function, the value range of the fixed-point value is [0, $2^{b_a}$-1]=[0, 15], in order to transplant to the hardware platform more effectively, the low-bit unsigned number is converted into the low-bit signed number, that is, an offset is determined so that the quantized activation value output by the ReLU function is converted from an unsigned number into a signed number, and can be expressed by the first low-bit signed number, and the input values input to the ReLU function are data shifted according to the offset. For example, the input value of each ReLU function is subtracted by 8 when $b_a$=4, so that the value range becomes [-8, 7]. According to the output characteristics of the ReLU function, the output value of the ReLU function will also be subtracted by 8, which ensures that the 4-bit signed number is used to save these data; in order to avoid the influence of the ReLU function taking the signed value to 0, then delete each of ReLU function layers, and compensate the offset in the next layer of the deleted ReLU function layer, for example, when the next layer is a convolutional layer, the offset can be added to bias data of the convolutional layer; when the next layer is an additive layer, the offset can be added to a preset value of the layer.

In this step, the input values and output values of the ReLU activation function are converted from unsigned numbers to signed numbers, and the offsets generated from unsigned numbers to signed numbers are compensated in the next layer, so that the resource consumption of unsigned numbers can be effectively reduced during migration and deployment.

Step 508, based on the quantization result, performing fixed-point processing on the relevant parameters.

In this step, any low-bit quantization value obtained in the above steps, including the input activation value after quantization of each of convolutional layers, the input activation value after quantization of non-convolutional functional layer, the signed number of the input value and/or output value of the activation function layer whose activation function is ReLU, the input value and/or output value after quantization of the deleted ReLU activation function layer, the value of the offset of the activation function layer whose activation function is ReLU quantized by low-bit, is converted into fixed-point values for storing, thereby realizing the fixed-point processing of the entire network parameters when the low-bit quantization values transmitted between each of layers in the current neural network are converted into the fixed-point values. It should be understood that in the above steps, the retraining in step 506 can also be performed only after the input activation value of the convolutional layer is quantized, that is, after step 504 and before step 505, the upper value limit $\beta$ of the activation value is taken as a parameter that can be updated in training iterations, and is updated along with the training of the entire network until it converges. In this way, the quantization step s is also updated along with the update. It is also possible to retrain the neural network after the input activation values of the convolutional layers are quantized and the input activation values of the non-convolutional functional layers are quantized respectively.

In the embodiment of the present application, the input activation values of the convolutional layer is fixed-point with low-bit, which compresses the calculation amount and storage space. During the fixed-point process, for the ReLU activation function, its range is converted from unsigned to signed, and the offset generated by the change from unsigned to signed is compensated in the next functional layer, which is conducive to effectively reducing the resource consumption of unsigned number during migration and deployment. The neural network is retrained after the input activation values of the convolutional layer are quantized and/or the input activation values of the non-convolutional functional layer are quantized, which effectively reduces the error of the entire network and ensures that the quantized network still has sufficient target performance.

Embodiment 3

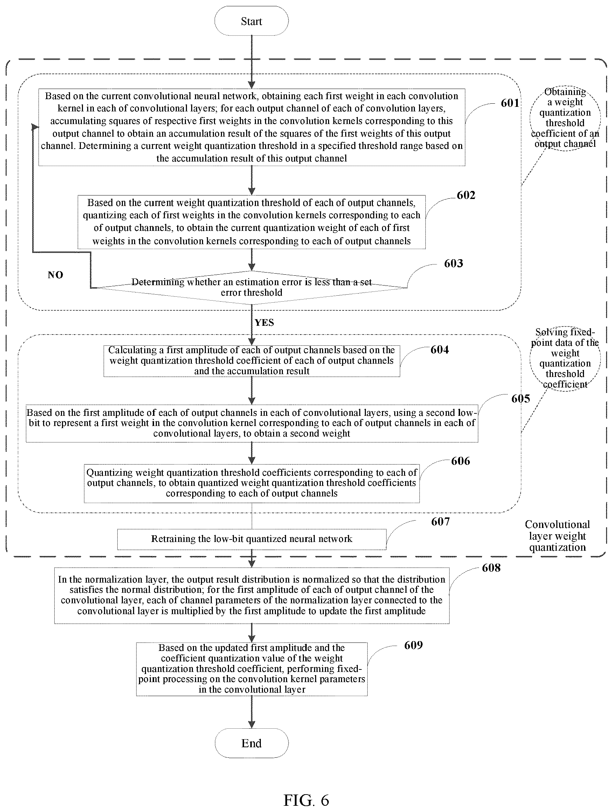

Referring to FIG. 6, which is a schematic flowchart of a fixed-point method for convolutional neural network according to Embodiment 3 of the present application. In this embodiment, the weights of the convolution kernels in the convolutional layer are quantized with the second low-bit.

Step 601, based on the current convolutional neural network, obtaining each first weight in each convolution kernel in each of convolutional layer; for each output channel of each of convolution layers, accumulating squares of each of first weights of the convolution kernel corresponding to the output channel to obtain accumulation result of the squares of the first weights of the output channel. Based on the accumulation results, a quantization threshold is searched in the specified threshold range as a current weight quantization threshold of the output channel. Wherein, the first weight is floating-point data.

In this step, for any output channel j of any convolutional layer i, the square of each first weight in each convolution kernel k corresponding to output channel j is calculated to obtain squares of each first weight in each convolution kernel corresponding to the output channel j, and the squares of all first weights in the output channel are accumulated, and the square number of all the first weights in all the convolution kernels corresponding to this output channel is accumulated to obtain the accumulation results of the output channel j;

wherein, the mathematical expression of accumulating the squares of all the first weights in all convolution kernels corresponding to the output channel j is expressed as:

$$L_{ij} = \sum_{k=1}^{k} \sum_{n=1}^{n} w_{fijkn}^2$$

wherein, $L_{ij}$ represents the accumulation result of the output channel j of the convolutional layer i, $w_{fijkn}$ is the n-th first weight in the convolution kernel k corresponding to the output channel j in the convolution layer i.

Based on the accumulation result $L_{ij}$ of the output channel of the convolution layer, a quantization threshold is searched in the specified threshold range as the current weight quantization threshold of the output channel j of the convolution layer i.

Through this step, the current weight quantization threshold of each output channel in each of convolutional layers can be obtained.

Step 602, based on the current weight quantization threshold of each of output channels, quantizing each of first weights in the convolution kernel corresponding to each of output channels, to obtain the current quantization weight of each of first weights in the convolution kernel corresponding to each of output channels.

In this step, for any convolutional layer i, multiplying the accumulation result of the output channel j of the convolutional layer by the current weight quantization threshold of the output channel, as the current amplitude of the output channel; comparing each of first weights in the convolution kernel corresponding to the output channel with the current amplitude, if a first weight is greater than the current amplitude, the first weight is assigned as the current amplitude, and if a first weight is less than the negative number of the current amplitude, the first weight is assigned as the negative number of the current amplitude, and a first weight between the negative number of the current amplitude and the current amplitude is assigned as 0, so that the current quantization weight of the output channel can be obtained.

The mathematical expression is:

$$\lambda_{ij} = L_{ij} \times t_{ij}$$

wherein, $t_{ij}$ is the current weight quantization threshold of the output channel j in the convolutional layer i, $\lambda_{ij}$ is the current amplitude of the output channel j in the convolutional layer i;

$$\overline{w}_{fijkn} = \begin{cases} \lambda_{ij}, & \text{if } w_{fijkn} > \lambda_{ij}; \\ -\lambda_{ij}, & \text{if } w_{fijkn} < -\lambda_{ij}; \\ 0, & \text{if } \lambda_{ij} \leq w_{fijkn} \leq -\lambda_{ij} \end{cases}$$

wherein, $\overline{w}_{fijkn}$ is the current quantization weight of the n-th first weight of the convolution kernel k corresponding to the output channel j in the convolutional layer i, and $w_{fijkn}$ is the n-th first weight of the convolution kernel k corresponding to the output channel j in the convolutional layer i.

Step 603, determining whether an estimation error is less than a set error threshold.

According to the error between the current quantization weight of each of first weights of the output channel and the first weight, the estimation error of the channel is determined. If the estimation error is greater than the set error threshold, it indicates that the current quantization threshold of the output channel does not meet the requirements, re-search the quantization threshold as the current weight quantization threshold of the output channel, and return to step 601 until the estimation error is less than the set error threshold, and the current weight quantization threshold corresponding to the estimation error is used as the weight quantization threshold coefficient.

In this step, the estimation error may be an average error or accumulation error between the current quantization weight of the first weight of the output channel and the first weight, that is, the average error or accumulation error between the current quantization weights of all first weights of the output channel j and all first weights which can be mathematically expressed as:

$$\text{Accumulation error} = \sum_{k=1}^{k} \sum_{n=1}^{n} \left( \overline{w}_{fijkn} - w_{fijkn} \right),$$

or

$$\text{Average error} = \frac{\sum_{k=1}^{k} \sum_{n=1}^{n} \left( \overline{w}_{fijkn} - w_{fijkn} \right)}{k \times n}$$

Through steps 601-603, the weight quantization threshold coefficient of each output channel in each convolutional layer can be obtained.

Step 604: calculating a first amplitude of each of output channels based on the weight quantization threshold coefficient of each of output channels and the accumulation result.

In this step, for any convolution layer i, the result obtained by multiplying the accumulation result of the output channel j of the convolution layer by the weight quantization threshold coefficient of the output channel is taken as the first amplitude of the output channel;

The mathematical expression is:

$$\alpha_{ij} = L_{ij} \times T_{ij}$$

wherein, $T_{ij}$ is the weight quantization threshold coefficient of the output channel j in the convolutional layer i, $\alpha_{ij}$ is the first amplitude of the output channel j in the convolutional layer i.

Step 605, based on the first amplitude of each of output channels in each of convolutional layers, using the second low-bit to represent a first weight in the convolution kernel corresponding to each of output channels in each of convolutional layers, to obtain a second weight. That is, performing a second low-bit quantization on each first weight, to perform fixed-point processing on the first weight.

In order to ensure the target performance of the convolutional neural network, the low-bit quantization method is selected according to the sensitivity to the change of the target performance of the convolutional neural network caused by the low-bit quantization. If the target performance drops little, it indicates that the convolutional layer is not sensitive; if the target performance degrades a lot when performing the low-bit quantization, it indicates that the convolutional layer is very sensitive.

For an insensitive convolutional layer, a second low-bit is used to express the first weight. For the low-bit representation of the n-th first weight $w_{fijkn}$ in the convolution kernel k corresponding to the output channel j in the convolutional layer i, that is, the second weight $w_{ijkn}$ is:

$$w_{ijkn} = \alpha_{ij} T1_{ij}$$

wherein, $\alpha_i$ is the first amplitude of the output channel j in the convolution layer i; $T1_{ij}$ is the low-bit representation of the weight quantization threshold coefficient of the output channel j in the convolution layer i, that is, the fixed-point weight quantization threshold coefficient; $w_{ijkn}$ is the fixed-point data.

For a sensitive convolutional layer, a combination of at least two second low-bit bases is used to express the floating-point weights of the convolutional layer. For the low-bit representation of the n-th first weight $w_{fijkn}$ in the convolution kernel k corresponding to the output channel j in the convolutional layer i, that is, the second weight $w_{ijkn}$ is:

$$w_{ijkn} = \alpha_{i1} T1_{ij} + \ldots + \alpha_{im} Tm_{ij}$$

wherein, $\alpha_{im}$ is the first amplitude of the m-th combined output channel in the J output channels in the convolution layer i; $Tm_{ij}$ is the combined weight quantization threshold coefficient of the output channel j in the convolution layer i expressed by the m-th combined low-bit base in the combination of at least two low-bit bases, that is, the combined weight quantization threshold coefficient after the combination of at least two low-bit bases is fixed-point; m is the number of the second low-bit bases in the combination, which is less than or equal to J; J is the total number of output channels in the convolutional layer i; $w_{ijkn}$ is fixed-point data.

Step 606: quantizing weight quantization threshold coefficients corresponding to each of output channels, to obtain quantized weight quantization threshold coefficients corresponding to each of output channels. That is, coefficient quantization values.

In this step, for the insensitive convolution layer, for any output channel j, each of second weights in the convolution kernel corresponding to the output channel are compared with the first amplitude, when a second weight is greater than the first amplitude, then the first coefficient quantization value of the weight quantization threshold coefficient of the output channel is the fixed-point weight quantization threshold coefficient itself; when a second weight is less than the negative number of the first amplitude, then the first coefficient quantization value of the weight quantization threshold coefficient of the output channel is the negative number of the fixed-point weight quantization threshold coefficient; when a second weight is between the negative number of the first amplitude and the first amplitude, then the weight quantization threshold coefficient of the output channel is assigned as 0, thereby obtaining the first coefficient quantization value of the weight quantization threshold coefficient corresponding to the output channel.

The mathematical expression is:

$$\overline{T1_{ij}} = \begin{cases} T1_{ij}, & \text{if } w_{ijkn} > \alpha_{ij}; \\ -T1_{ij}, & \text{if } w_{ijkn} < -\alpha_{ij}; \\ 0, & \text{if } \alpha_{ij} \leq w_{ijkn} \leq -\alpha_{ij}; \end{cases}$$

wherein, $w_{ijkn}$ is the n-th second weight in the convolution kernel k corresponding to the output channel j in the convolutional layer i, $\overline{T_{ij}}$ is the first coefficient quantization value of the weight quantization threshold coefficient of the output channel j in the convolutional layer i, that is, the first coefficient quantization value of the output channel j.

For a sensitive convolutional layer, for any combined output channel m in any convolutional layer, the result of multiplying the first amplitude of the combined output channel by the combined weight quantization threshold coefficient of the combined output channel is taken as the second amplitude, the second amplitude is compared with the second weight, if the second weight is greater than the second amplitude, the combined weight quantization threshold coefficient is used as the second coefficient quantization value, if the second weight is less than the negative number of the second amplitude, the negative number of the combined weight quantization threshold coefficient is used as the second coefficient quantization value, if the second weight is between the negative number of the second amplitude and the second amplitude, 0 is used as the second coefficient quantization value, so as to obtain the second coefficient quantization value of the combined weight quantization threshold coefficient corresponding to the combined output channel.

The mathematical expression is:

$$\overline{Tm_{ij}} = \begin{cases} Tm_{ij}, & \text{if } w_{ijkn} > \alpha_{im} Tm_{ij}; \\ -Tm_{ij}, & \text{if } w_{ijkn} < -\alpha_{im} Tm_{ij}; \\ 0, & \text{if } \alpha_{im} Tm_{ij} \leq w_{ijkn} \leq -\alpha_{im} Tm_{ij}; \end{cases}$$

wherein, $w_{ijkn}$ is the n-th second weight in the convolution kernel k corresponding to the output channel j in the convolutional layer i, $\overline{Tm_{ij}}$ is the second coefficient quantization value of the combined weight quantization threshold coefficient of the m-th combined output channel in J output channels of the convolutional layer i, that is, the second coefficient quantization value of the output channel m.

For example, if the value range of the combined weight quantization threshold coefficient is -1, 0, and 1, the second coefficient quantization value for any combined weight quantization threshold coefficient m is:

$$\overline{Tm_{ij}}=\begin{cases} 1, & \text{if } w_{ijkn} > \alpha_{im}Tm_{ij}; \\ -1, & \text{if } w_{ijkn} < -\alpha_{im}Tm_{ij}; \\ 0, & \text{if } \alpha_{im}Tm_{ij} \leq w_{ijkn} \leq -\alpha_{im}Tm_{ij}; \end{cases}$$

step 607, retraining the current low-bit quantized neural network.

A weight of each of output channels is calculated according to the coefficient quantization value of the weight quantization threshold coefficient and the first amplitude of each of output channels to obtain a first quantization weight, and each of first quantization weights of each of output channels is input into the convolutional neural network for retraining.

In this step, for the insensitive convolutional layer, the first quantization weight of the n-th first weight in the convolution kernel k corresponding to the output channel j in the convolutional layer i is: the product of the first amplitude of the output channel j in the convolution layer i and the first coefficient quantization value; the mathematical formula is expressed as:

$$\overline{w_{ijkn}} = \alpha_{ij}\overline{T1_{ij}}$$

wherein, $\overline{w_{ijkn}}$ is the first quantization weight of the n-th first weight in the convolution kernel k corresponding to the output channel j in the convolution layer i, which means that for the insensitive convolution layer, the first quantization weights of each of first weights in the convolution kernel corresponding to the same output channel are the same.

For the sensitive convolutional layer, the first quantization weight of the n-th first weight in the convolution kernel k corresponding to the output channel j in the convolutional layer i is: the sum of the product of the first amplitude of each of combined output channels and the second coefficient quantization value of its combined output channel; the mathematical formula is expressed as:

$$\overline{w_{ijkn}} = \alpha_{i1}\overline{T1_{ij}} + \ldots + \alpha_{im}\overline{Tm_{ij}}$$

Through steps 604 to 607, the weights originally stored as 32 bits are quantized into $b_w$ bits.

Step 608, in the normalization layer, the output result distribution is normalized so that the distribution satisfies the normal distribution; for the first amplitude of each of output channel of the convolutional layer, each of channel parameters of the normalization layer connected to the convolutional layer is multiplied by the first amplitude to update the first amplitude.

In a classic neural network, the normalization operation is performed after the convolutional layer, that is, output result data of each of output channels of the convolutional layer is normalized to a distribution whose mean is 0 or whose variance is 1, so that the distribution satisfies the normal distribution. Since the parameters of the normalization layer are also independent of each of output channels, in this application, each of channel parameters of the normalization layer are multiplied by the first amplitude of each of output channels of the convolutional layer connected to the normalization layer.

For the insensitive convolutional layer, the first amplitude of the output channel is multiplied by the channel parameter of the channel corresponding to the normalization layer to obtain the updated first amplitude. The above-mentioned updated first amplitude is expressed by the mathematical formula as:

$$\alpha_{ij} \equiv \alpha_{ij} \times \sigma_{ij}$$

Wherein, $\sigma_{ij}$ is the channel parameter of channel j in the normalization layer i connected to the convolutional layer i, the above formula represents that the parameter of the normalization layer channel j connected to the output of the convolutional layer i is multiplied by the first amplitude of the output channel j of the convolutional layer i, and the first amplitude is updated with the multiplication result.

For the sensitive convolutional layer, the first amplitude of each combined output channel in the output channel is respectively multiplied by the channel parameter of the channel corresponding to the normalization layer to obtain the updated first amplitude of the combined output channel. The above-mentioned updated first amplitude is expressed by the mathematical formula as:

$$\alpha_{im} \equiv \alpha_{im} \times \sigma_{im}$$

wherein, $\sigma_{im}$ represents the channel parameter corresponding to the combined output channel m in the convolutional layer i in the normalization layer i; the above formula is expressed as: the first amplitude of each combined output channel in the output channel J of the convolutional layer i, is multiplied by the channel parameter corresponding to the combined output channel in the normalization layer i connected to the output of the convolutional layer i, and the first amplitude of the combined output channel is updated with the multiplication result.

The normalization parameter fusion performed in this step causes the first amplitude to be updated so as to remove the influence of the normalization operation on the network performance.

Step 609, based on the updated first amplitude and the coefficient quantization value of the weight quantization threshold coefficient, performing fixed-point processing on the convolution kernel parameters in the convolutional layer.

In this step, the low-bit quantization values transmitted between each of convolutional layers in the neural network are converted into fixed-point values, specifically, any low-bit quantization value obtained in the above steps, including a first amplitude after fusion of the parameters of a normalization layer of the output channel of the sensitive convolutional layer, and a first coefficient quantization value, a first amplitude after fusion of the parameters of a normalization layer of a selected combined output channel in the output channels of the insensitive convolutional layer, and the value of the second coefficient quantization value quantized by low-bit, is converted into fixed-point values for storing, thereby converting the low-bit quantization values transmitted between each of layers in the current neural network into the fixed-point values, realizing the fixed-point processing of network convolutional layer parameters.

It should be understood that in this embodiment, as in step 507 in Embodiment 2, the input values and output values of the ReLU activation function are converted from unsigned numbers to signed numbers, and the offsets generated from unsigned numbers to signed numbers are compensated in the next layer, so that the resource consumption of unsigned numbers can be effectively reduced during migration and deployment.

The embodiments of the present application enable weights of the convolution kernels in the final fixed-point neural network are represented by low-bit fixed-point, so that they can be easily transplanted into embedded platforms and application-specific integrated circuits; the weights of the convolution kernels are fixed-pointed into low bits, and the calculation amount and storage space are greatly compressed; for the weights of the quantization-sensitive convolutional layers, more computation is allocated, and less computation is allocated for the insensitive layers, which realizes the non-uniform quantization of the weights of the convolution kernels, which can effectively reduce the network quantization performance error and improve the target performance of the neural network. The staged quantization method does not require layer-by-layer calculation or repeated calculation, which can ensure that the quantization performance error of each functional layer is low. The neural network is retrained after the weights of each convolutional layer are quantized, which effectively reduces the error of the entire network and ensures that the quantized network still has sufficient target performance.

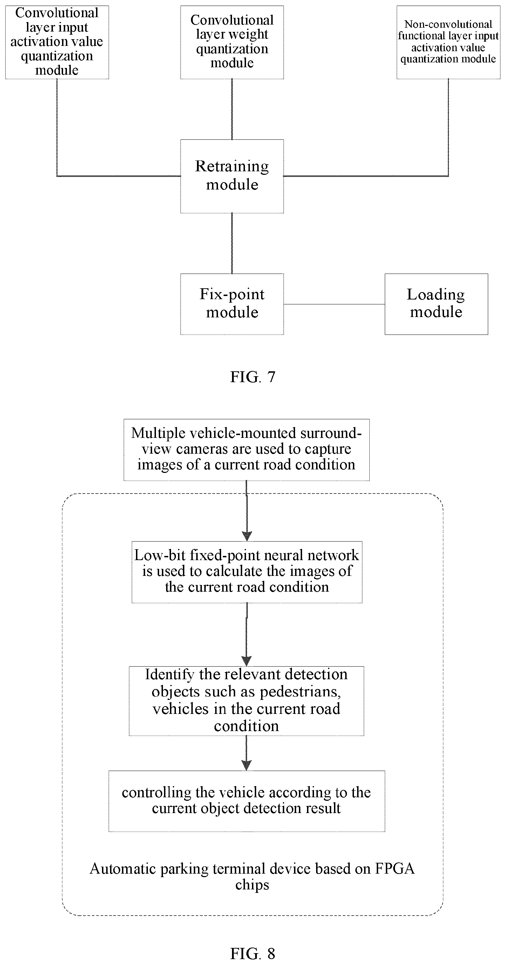

Referring to FIG. 7, which is a schematic diagram of a fixed-point apparatus for a neural network according to an embodiment of the present application. The apparatus includes:

a convolutional layer input activation value quantization module, configured for performing a first low-bit quantization on input activation values of convolutional layers in the neural network;

a convolutional layer weight quantization module, configured for performing a second low-bit quantization on weights of convolution kernels of the convolutional layers in the neural network;

a non-convolutional functional layer input activation value quantization module, configured for performing a third low-bit quantization on input activation values of non-convolutional functional layers other than the convolutional layers in the neural network;

a retraining module, configured for retraining the current low-bit quantized neural network;

a fixed-point module, configured for performing fixed-point processing based on each of low-bit quantization results in the retrained neural network;

a loading module, configured for loading the fixed-point neural network. For example, it is loaded into hardware such as FPGA, DSP, firmware, or embedded system.

wherein the first low-bit, the second low-bit, and the third low-bit are within 1 to 8 bits.

Optionally, the convolutional layer input activation value quantization module is specifically configured for inputting training data to the neural network to calculate first activation values of each of convolutional layers; for respective first activation values of any convolutional layer, performing the following steps: determining a current quantization step according to a distribution of the respective first activation values of this convolutional layer; calculating a upper value limit for limiting a value range of first activation values of this convolutional layer according to the current quantization step and the first low-bit; obtaining, according to the upper value limit, a value for each of the first activation values of this convolutional layer to obtain respective second activation values of this convolutional layer; and quantizing the respective second activation values of this convolutional layer to obtain respective quantized activation values of this convolutional layer.

Optionally, the convolutional layer weight quantization module is specifically configured for performing the following steps for any output channel in any convolutional layer: obtaining each of first weights of convolution kernels corresponding to this output channel; determining, according to a distribution of each of the first weights, a current weight quantization threshold of this output channel; obtaining, based on the current weight quantization threshold, a current quantization weight of each of first weights of this output channel; determining an estimation error of this output channel according to an error between current quantization weight of each first weight of the first weights of the output channel and this first weight; if the estimation error exceeds an error threshold, adjusting the current weight quantization threshold, and returning to perform the step of obtaining the current quantization weight of each of first weights of the output channel based on the current weight quantization threshold, until the estimation error does not exceed the error threshold, and using the current weight quantization threshold corresponding to the estimation error as a weight quantization threshold coefficient of this output channel; calculating a first amplitude of this output channel based on the weight quantization threshold coefficient; based on the first amplitude of this output channel, using the second low-bit to express a low-bit of the first weight to obtain a second weight; according to a comparison result between the second weight and the first amplitude of this output channel, quantizing the weight quantization threshold coefficient of this output channel to obtain a coefficient quantization value of the weight quantization threshold coefficient of this output channel.

Optionally, the convolutional layer weight quantization module, in determining the current weight quantization threshold of this output channel according to the distribution of each of first weights, is specifically configured for accumulating squares of respective first weights in the convolution kernels corresponding to this output channel to obtain an accumulation result of this output channel; determining a current weight quantization threshold in a specified threshold range based on the accumulation result of this output channel;

the convolutional layer weight quantization module, in obtaining the current quantization weight of each of first weights of this output channel based on the current weight quantization threshold, is specifically configured for calculating a product of the accumulation result of this output channel and the current weight quantization threshold, to obtain a current amplitude of this output channel; comparing each of first weights in the convolution kernels corresponding to the output channel with the current amplitude; for any first weight, if this first weight is greater than the current amplitude, assigning the current amplitude to this first weight to obtain a current quantization weight of this first weight; for any first weight, if this first weight is less than a negative number of the current amplitude, assigning the negative number of the current amplitude to this first weight, to obtain a current quantization weight of this first weight; for any first weight, if this first weight is greater than or equal to the negative number of the current amplitude, and is less than or equal to the current amplitude, then assigning 0 to the first weight, to obtain a current quantization weight of this first weight;

the convolutional layer weight quantization module, in determining the estimation error of this output channel according to the error between the current quantization weight of each of first weights of this output channel and this first weight, is specifically configured for calculating an average error or an accumulation error of all errors according to the error between the current quantization weight of each of first weights of this output channel and this first weight;

the convolutional layer weight quantization module, in calculating the first amplitude of this output channel based on the weight quantization threshold coefficient, is specifically configured for calculating a product of the accumulation result of this output channel and the weight quantization threshold coefficient of this output channel to obtain the first amplitude of this output channel.

Optionally, the convolution layer weight quantization module, in using the one second low-bit to express the low-bit of the first weight to obtain the second weight based on the first amplitude of this output channel, is specifically configured for using one second low-bit base to express the first weight, to obtain the second weight for an insensitive convolutional layer; using at least two second low-bit bases to express the first weight, to obtain the second weight for a sensitive convolutional layer;
the retraining module, is specifically configured for, for any convolutional layer, calculating a weight of each of output channels according to the coefficient quantization value of the weight quantization threshold coefficient and the first amplitude of each of the output channels in the convolutional layer to obtain a first quantization weight, and inputting the first quantization weight of each of output channels into the neural network for retraining.

Optionally, the convolutional layer weight quantization module, in using the one second low-bit base to express the first weight to obtain the second weight for the insensitive convolutional layer, is specifically configured for determining one fixed-point value of the weight quantization threshold coefficient according to a fixed-point value range determined by the second low-bit; calculating a product of the fixed-point value and the first amplitude to obtain the second weight;

the convolutional layer weight quantization module, in quantizing the weight quantization threshold coefficient of this output channel according to the comparison result between the second weight and the first amplitude of this output channel to obtain the coefficient quantization value of the weight quantization threshold of this output channel, is specifically configured for comparing the second weight with the first amplitude of this output channel; if the second weight is greater than the first amplitude, using the fixed-point value of the weight quantization threshold coefficient itself as a first coefficient quantization value of the weight quantization threshold coefficient; if the second weight value is less than a negative number of the first amplitude, using the negative number of the fixed-point value of the weight quantization threshold coefficient as the first coefficient quantization value of the weight quantization threshold coefficient; if the second weight is greater than or equal to the negative number of the first amplitude and less than or equal to the first amplitude, using 0 as the first coefficient quantization value of the weight quantization threshold coefficient;

the convolutional layer weight quantization module, in calculating a weight of each of output channels according to the coefficient quantization value of the weight quantization threshold coefficient of each of output channels and the first amplitude of each of output channels in this convolutional layer to obtain the first quantization weight, is specifically configured for multiplying, for any output channel in any convolutional layer, the first amplitude of this output channel by the first coefficient quantization value of the weight quantization threshold coefficient of this output channel, to obtain a first quantization weight of this output channel.

Optionally, the convolutional layer weight quantization module, in using at least two second low-bit bases to express the first weight for the sensitive convolutional layer to obtain the second weight, is specifically configured for determining at least two fixed-point values of the weight quantization threshold coefficient according to the fixed-point value range determined by the second low-bit to obtain a combined weight quantization threshold coefficient; selecting at least two combined output channels from the convolutional layer; wherein the number of the combined output channels is the same as the number of the combined weight quantization threshold coefficients; multiplying a first amplitude of a combined output channel by a combined weight quantization threshold coefficient, and summing all the multiplied results to obtain the second weight;

the convolutional layer weight quantization module, in quantizing the weight quantization threshold coefficient of the output channel according to the comparison result between the second weight and the first amplitude of the output channel to obtain the coefficient quantization value of the weight quantization threshold of this output channel, is specifically configured for performing the following steps for any combined output channel in any convolutional layer: taking a result of multiplying the first amplitude of this combined output channel by a combined weight quantization threshold coefficient of this combined output channel as a second amplitude; comparing the second weight with the second amplitude of this output channel; if the second weight is greater than the second amplitude, using the fixed-point value of the combined weight quantization threshold coefficient of this combined output channel itself as a second coefficient quantization value of the combined weight quantization threshold coefficient; if the second weight is less than a negative number of the second amplitude, using the negative number of the fixed-point value of the combined weight quantization threshold coefficient of this combined output channel as the second coefficient quantization value of the combined weight quantization threshold coefficient; if the second weight is greater than or equal to the negative number of the second amplitude and less than or equal to the second amplitude, using 0 as the second coefficient quantization value of the combined weight quantization threshold coefficient;

the convolutional layer weight quantization module, in calculating a weight of each of output channels according to the coefficient quantization value of the weight quantization threshold coefficient and the second amplitude of each of output channels in this convolutional layer to obtain a first quantization weight, is specifically configured for calculating, for any convolutional layer, a sum of products of first amplitudes of respective combined output channels by the second coefficient quantization value of this combined output channel, to obtain the first quantization weight as a quantization result of each of first weights in the convolution kernels corresponding to this output channel.

Optionally, the non-convolutional layer input activation value quantization module is specifically configured for obtaining third activation values of each of the non-convolutional functional layers; for respective third activation values of any of the non-convolutional layers, performing the following steps: determining a current quantization step according to a distribution of the respective third activation values of this non-convolutional functional layer; calculating a upper value limit for limiting a value range of third activation values of this convolutional layer according to the current quantization step and a third low-bit; obtaining, according to the upper value limit, a value for each of the third activation values of this non-convolutional functional layer to obtain each of fourth activation values of this non-convolutional functional layer; and quantizing the fourth activation values of this non-convolutional functional layer to obtain respective quantized activation values of this non-convolutional layer.

Optionally, the apparatus further includes:

a determining module, configured for determining whether an activation function of an activation function layer in the neural network is a ReLU function;

a function processing module, configured for, if the determining module determines that the activation function of the activation function layer in the neural network is the ReLU function, converting a quantized activation value output by the ReLU function from an unsigned number to a signed number, subtracting an offset from an activation value of the signed number, deleting the ReLU function, compensating the offset in a convolutional layer or other functional layers to which the activation value is input, and performing the fixed-point processing based on each of low-bit quantization results in the retrained neural network;

a retraining module, configured for, if the determining module determines that the activation function of the activation function layer in the neural network is not the ReLU function, performing the fixed-point processing based on each of low-bit quantization results in the retrained neural network.

The embodiments of the present application enable the activation value and weights of convolution kernels in the final fixed-point neural network are represented by low-bit fixed-point, so that they can be easily transplanted into embedded platforms and application-specific integrated circuits; input activation values of the convolutional layer and/or weights of the convolution kernels are fixed-pointed into low bits, and the calculation amount and storage space are greatly compressed; the staged quantization method does not require layer-by-layer calculation or repeated calculation, and at the same time, it can ensure that the stage quantization performance error is low and can flexibly select parameters of the functional layer to be fixed-pointed according to the target performance requirements of the neural network. After the input activation values of each convolutional layer are quantized and the weights of each convolutional layer are quantized, the neural network is retrained, which avoids the accumulation of errors caused by the layer-by-layer training method, realizes end-to-end retraining, effectively reduces the error of the entire network, and ensures that the quantized network still has sufficient target performance.

Referring to FIG. 8, which is a schematic flowchart of the applying a low-bit fixed-point neural network to the object detection based on a vehicle-mounted camera according to an embodiment of the present application. Multiple vehicle-mounted surround-view cameras are used to capture images of a current road condition; in an automatic parking terminal device based on FPGA chips, the low-bit fixed-point neural network is used to calculate the images of the current road condition to identify the relevant detection objects such as pedestrians, vehicles in the current road condition; controlling the vehicle according to the current object detection result, which includes but is not limited to determining whether the vehicle is accelerating or decelerating or turning the steering wheel. In this application scenario, the hardware memory consumption of the application example is greatly reduced, and the hardware bandwidth can reach more than times the acceleration ratio.

For example, a "moving object detection" network model, which has 18 convolutional layers, 17 ReLU activation function layers, and 17 normalization layers *BatchNorm* and 2 accumulation layers *Eltwise*, the network model is fixed-pointed based on the above method. An 720p/1080p RGB road image captured by the camera is input, and after the fixed-point network model, detection frames of people, cars, bicycles and other objects in the captured image are output. Each detection frame is represented by 4 values, that is, coordinates of the upper left corner of the detection frame and the length and width of the detection frame.

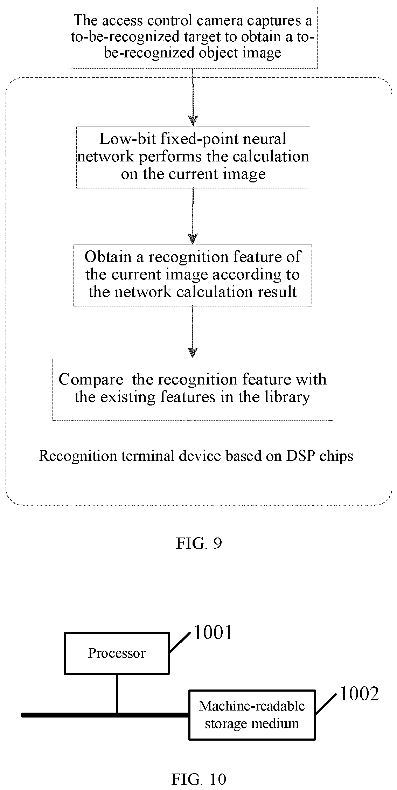

Referring FIG. 9, which is a schematic flowchart of applying a low-bit fixed-point neural network to image recognition based on access control camera according to an embodiment of the present application. The access control camera captures a to-be-recognized object to obtain a to-be-recognized object image. In the recognition terminal device based on DSP chips, the low-bit fixed-point neural network performs the calculation on the current image, obtains a recognition feature of the current image according to the network calculation result, compares the recognition feature with the existing features in the library, and determines whether the face recognition result is in the library according to the comparison result. In this application scenario, the hardware memory consumption of the example of the present application is greatly reduced, and the hardware bandwidth can reach more than times the acceleration ratio.

For example, a "face modeling" network model, which has 101 convolutional layers, 53 ReLU activation function layers, and 146 normalization layers *BatchNorm* and 48 accumulation layers *Eltwise*, the network model is fixed-pointed based on the above method. A 720p/1080p RGB face image captured by the camera is input, it is first processed into a grayscale image, and then the fixed-point network model is used to determine whether the face is successfully matched with the person in the face library. The output of the neural network is a multi-dimensional feature, the feature will be matched with the existing features in the face library, and matching or unmatched results will be returned.

It should be understood that the application of the fixed-point neural network of the present application is not limited to the above-mentioned applications, and can also be applied to include but not limited to image-based object pedestrian detection, gesture detection, road condition detection, and video analysis, etc. The fixed-point neural network is loaded into the hardware for realizing the application, so that the data required by various applications is processed through the neural network, so as to adapt to the miniaturization of the device and reduce the consumption of hardware resources. For example, a low-bit fixed-point neural network is loaded into at least one of the following hardwares: cameras, vehicle-mounted intelligent systems, floor cleaning robots, cargo carrying robots, drones, unmanned vending machines, etc.

The embodiment of the present application provide a computer device, as shown in FIG. 10, which may include a processor 1001 and a machine-readable storage medium 1002, the machine-readable storage medium 1002 stores machine-executable instructions that can be executed by the processor 1001, the processor 1001 is caused by machine-executable instructions to implement the fixed-point method for neural network as described above.

The above-mentioned machine-readable storage medium may include RAM (Random Access Memory), and may also include NVM (Non-Volatile Memory), for example, at least one disk memory. Optionally, the machine-readable storage medium may also be at least one storage device located away from the above-mentioned processor.

The above-mentioned processor may be a general-purpose processor, including a CPU (Central Processing Unit, central processing unit), NP (Network Processor, network processor), etc.; may also be a DSP (Digital Signal Processing, digital signal processor), an ASIC (Application Specific Integrated Circuit), FPGA (Field-Programmable Gate Array, Field Programmable Gate Array) or other programmable logic devices, discrete gate or transistor logic devices, discrete hardware components.

Data transmission between the machine-readable storage medium 1002 and the processor 1001 can be performed through wired connection or wireless connection, and the computer device can communicate with other devices through wired communication interface or wireless communication interface. The example shown in FIG. 10 is only an example of data transmission between the processor 1001 and the machine-readable storage medium 1002 through the bus, and is not limited to a specific connection mode.

The embodiments of the present application also provide a machine-readable storage medium storing machine executable instructions which, when called and executed by a processor, cause the processor to implement the fixed-point method of the neural network as described above.

The embodiments of the present application also provide a computer program product for executing the fixed-point method of the neural network when being executed.

In the aforementioned embodiments, it may be implemented in whole or in part by software, hardware, firmware, or any combination thereof. When implemented by software, it may be implemented in whole or in part in the form of a computer program product. The computer program product includes one or more computer instructions. The processes or functions described in accordance with the embodiments of the present invention is produced in whole or in part, when the computer program instructions are loaded and executed on a computer. The computer may be a general-purpose computer, a dedicated computer, a computer network, or other programmable device. The computer instructions may be stored in a computer-readable storage medium or may be transmitted from one computer-readable storage medium to another computer-readable storage medium, for example, the computer instructions may be transmitted from a web site, a computer, a server, or a data center to another web site, another computer, another server, or another data center via a cable (such as a coaxial cable, an optical fiber, a digital subscriber line (DSL)) or wireless (such as infrared, wireless, microwave, etc.). The computer-readable storage medium may be any available medium that may be accessed by a computer or a data storage device such as a server or a data center containing one or more available medium integrations. The available media may be magnetic media (such as floppy disks, hard disks, magnetic tapes), optical media (such as DVDs), or semiconductor media (such as solid state disk (SSD)), etc.

For embodiments of the apparatus, computer device, machine-readable storage medium and computer program product, since they are similar to the embodiments of the method, the description thereof is relatively simple; the relating parts could refer to the parts of the description of embodiments of the method.

It should be noted that the relationship terms herein such as "first", "second", and the like are only used for distinguishing one entity or operation from another entity or operation, but do not necessarily require or imply that there is any actual relationship or order between these entities or operations. Moreover, the terms "include", "comprise" or any other variants thereof are intended to cover a non-exclusive inclusion, so that processes, methods, articles, or devices including a series of elements include not only those elements listed but also those not specifically listed or elements intrinsic to these processes, methods, articles, or equipment. Without further limitations, elements defined by the sentences "comprise(s) a." or "include(s) a." do not exclude that there are other identical elements in the processes, methods, articles, or devices which include these elements.

The description is only for preferred embodiments of the present application, and embodiments are not so limited. Any modifications, substitutions, improvements, etc., which are made within the spirit and principles of the present application, will fall into the protection scope of the present application.

**Claims**

1.   A fixed-point method for a neural network, wherein the method comprises:

performing at least one of following low-bit quantizations on a neural network: performing a first low-bit quantization on input activation values of convolutional layers in the neural network, performing a second low-bit quantization on weights of convolution kernels of the convolutional layers in the neural network; for non-convolutional functional layers other than the convolutional layers in the neural network, performing a third low-bit quantization on input activation values of the non-convolutional functional layers;
retraining the current low-bit quantized neural network;
performing fixed-point processing based on each of low-bit quantization results in the retrained neural network;
loading the fixed-point neural network;
wherein the first low-bit, the second low-bit, and the third low-bit are within 1 to 8 bits.

2.   The fixed-point method of claim 1, wherein performing a first low-bit quantization on input activation values of convolutional layers in the neural network comprises:

inputting training data to the neural network to calculate first activation values input by each of convolutional layers;
for respective first activation values of any convolutional layer, performing the following steps:

determining a current quantization step according to a distribution of the respective first activation values of this convolutional layer;
calculating a upper value limit for limiting a value range of first activation values of this convolutional layer according to the current quantization step and the first low-bit;
obtaining, according to the upper value limit, a value for each of the first activation values of this convolutional layer to obtain respective second activation values of this convolutional layer;
quantizing the respective second activation values of this convolutional layer to obtain respective quantized activation values of this convolutional layer.

3.   The fixed-point method of claim 1, wherein performing a second low-bit quantization on weights of convolution kernels in the convolutional layers in the neural network comprises:
for any output channel in any convolutional layer, performing the following steps :

obtaining each of first weights of convolution kernels corresponding to this output channel;
determining, according to a distribution of each of the first weights, a current weight quantization threshold of this output channel;
obtaining, based on the current weight quantization threshold, a current quantization weight of each of the first weights of this output channel;
determining an estimation error of this output channel according to an error between the current quantization weight of each first weight of the first weights of the output channel and this first weight;
if the estimation error exceeds an error threshold, adjusting the current weight quantization threshold, and returning to perform the step of obtaining the current quantization weight of each of first weights of the output channel based on the current weight quantization threshold, until the estimation error does not exceed the error threshold, and using the current weight quantization threshold corresponding to the estimation error as a weight quantization threshold coefficient of this output channel;
calculating a first amplitude of this output channel based on the weight quantization threshold coefficient;
based on the first amplitude of this output channel, using the second low-bit to express a low-bit of the first weight to obtain a second weight; according to a comparison result between the second weight and the first amplitude of this output channel, quantizing the weight quantization threshold coefficient of this output channel to obtain a coefficient quantization value of the weight quantization threshold coefficient of this output channel.

4. The fixed-point method of claim 3, wherein determining, according to the distribution of each of the first weights, the current weight quantization threshold of the output channel, comprises:

accumulating squares of respective first weights in the convolution kernels corresponding to this output channel to obtain an accumulation result of this output channel;
determining a current weight quantization threshold in a specified threshold range based on the accumulation result of this output channel;
obtaining, based on the current weight quantization threshold, the current quantization weight of each of first weights of this output channel, comprises:

calculating a product of the accumulation result of this output channel and the current weight quantization threshold of this output channel to obtain a current amplitude of this output channel;
comparing each of first weights in the convolution kernels corresponding to the output channel with the current amplitude;
for any first weight, if this first weight is greater than the current amplitude, assigning the current amplitude to this first weight to obtain a current quantization weight of this first weight;
for any first weight, if this first weight is less than a negative number of the current amplitude, assigning the negative number of the current amplitude to this first weight, to obtain a current quantization weight of this first weight;
for any first weight, if this first weight is greater than or equal to the negative number of the current amplitude, and is less than or equal to the current amplitude, then assigning 0 to the first weight, to obtain a current quantization weight of this first weight;
determining the estimation error of this output channel according to the error between the current quantization weight of each of the first weights of this output channel and this first weight comprises:

calculating, according to the error between the current quantization weight of each of the first weights of this output channel and this first weight, an average error or an accumulation error of all errors;
calculating the first amplitude of this output channel based on the weight quantization threshold coefficient comprises:
calculating a product of the accumulation result of this output channel and the weight quantization threshold coefficient of this output channel to obtain the first amplitude of this output channel.

5. The fixed-point method of claim 4, wherein using the second low-bit to express the low-bit of the first weight based on the first amplitude of this output channel to obtain the second weight comprises:

for an insensitive convolutional layer, using one second low-bit base to express the first weight, to obtain the second weight;
for a sensitive convolutional layer, using at least two second low-bit bases to express the first weight, to obtain the second weight;
retraining the current low-bit quantized neural network comprises:
for any convolutional layer, calculating a weight of each of output channels according to the coefficient quantization value of the weight quantization threshold coefficient and the first amplitude of each of the output channels in this convolutional layer to obtain a first quantization weight, and inputting the first quantization weight of each of the output channels into the neural network for retraining.

6. The fixed-point method of claim 5, wherein for the insensitive convolutional layer, using the one second low-bit base to express the first weight to obtain the second weight comprises:

determining, according to a fixed-point value range determined by the second low-bit, a fixed-point value of the weight quantization threshold coefficient;
calculating a product of the fixed-point value and the first amplitude, to obtain the second weight;
quantizing, according to the comparison result between the second weight and the first amplitude of this output channel, the weight quantization threshold coefficient of this output channel to obtain the coefficient quantization value of the weight quantization threshold coefficient of this output channel, comprises:

comparing the second weight with the first amplitude of this output channel;

if the second weight is greater than the first amplitude, using the fixed-point value of the weight quantization threshold coefficient itself as a first coefficient quantization value of the weight quantization threshold coefficient;

if the second weight value is less than a negative number of the first amplitude, using the negative number of the fixed-point value of the weight quantization threshold coefficient as the first coefficient quantization value of the weight quantization threshold coefficient;

if the second weight is greater than or equal to the negative number of the first amplitude and less than or equal to the first amplitude, using 0 as the first coefficient quantization value of the weight quantization threshold coefficient;

the calculating the weight of each of output channels according to the coefficient quantization value of the weight quantization threshold coefficient and the first amplitude of each of the output channels in this convolutional layer to obtain the first quantization weight comprises:

for any output channel in any convolutional layer, multiplying the first amplitude of this output channel by the first coefficient quantization value of the weight quantization threshold coefficient of this output channel, to obtain a first quantization weight of this output channel.

7. The fixed-point method of claim 6, wherein for the sensitive convolutional layer, using at least two second low-bit bases to express the first weight to obtain the second weight comprises:

determining, according to the fixed-point value range determined by the second low-bit, at least two fixed-point values of the weight quantization threshold coefficient, to obtain a combined weight quantization threshold coefficient;

selecting at least two combined output channels from the convolutional layer; wherein the number of combined output channels is the same as the number of combined weight quantization threshold coefficients;

multiplying a first amplitude of a combined output channel by a combined weight quantization threshold coefficient, and summing all the multiplied results to obtain the second weight;

quantizing, according to the comparison result between the second weight and the first amplitude of this output channel, the weight quantization threshold coefficient of this output channel to obtain the coefficient quantization value of the weight quantization threshold coefficient of this output channel, comprises:

for any combined output channel in any convolutional layer, performing the following steps:

taking a result of multiplying the first amplitude of this combined output channel by a combined weight quantization threshold coefficient of this combined output channel as a second amplitude;

comparing the second weight with the second amplitude of this output channel;

if the second weight is greater than the second amplitude, using the fixed-point value of the combined weight quantization threshold coefficient of this combined output channel as a second coefficient quantization value of the combined weight quantization threshold coefficient;

if the second weight is less than a negative number of the second amplitude, using the negative number of the fixed-point value of the combined weight quantization threshold coefficient of this combined output channel as the second coefficient quantization value of the combined weight quantization threshold coefficient;

if the second weight is greater than or equal to the negative number of the second amplitude and less than or equal to the second amplitude, using 0 as the second coefficient quantization value of the combined weight quantization threshold coefficient;

calculating the weight of each of output channels according to the coefficient quantization value of the weight quantization threshold coefficient and the second amplitude of each of the output channels in this convolutional layer to obtain a first quantization weight comprises:

for any convolutional layer, calculating a sum of products of first amplitudes of respective combined output channels by the second coefficient quantization value of this combined output channel, to obtain the first quantization weight as a quantization result of each of first weights in the convolution kernels corresponding to this output channel.

8. The fixed-point method of claim 1, wherein performing, for non-convolutional functional layers other than the convolutional layers in the neural network, the third low-bit quantization on the input activation values of the non-convolutional functional layers comprises:

obtaining third activation values input by each of the non-convolutional functional layers;

for respective third activation values input by any of the non-convolutional functional layers, performing the following steps:

determining a current quantization step according to a distribution of the respective third activation values of this non-convolutional functional layer;

calculating a upper value limit for limiting a value range of the third activation values of this convolutional layer according to the current quantization step and a third low-bit;

obtaining, according to the upper value limit, a value for each of the third activation values of this non-convolutional functional layer to obtain each of fourth activation values of this non-convolutional functional layer;

quantizing the fourth activation values of this non-convolutional functional layer to obtain respective quantized activation values of this non-convolutional functional layer.

9. The fixed-point method of claim 1, wherein after performing, for non-convolutional functional layers other than the convolutional layers in the neural network, the third low-bit quantization on the input activation values of the non-convolutional functional layers, the method further comprises:

determining whether an activation function of an activation function layer in the neural network is a ReLU function;

if the activation function of the activation function layer in the neural network is the ReLU function, converting a quantized activation value output by the ReLU function from an unsigned number to a signed number, subtracting an offset from an activation value of the signed number, deleting the ReLU function, compensating the offset in a convolutional layer or other functional layers to which the activation value is input, and performing a fixed-point processing based on each of low-bit quantization results in the retrained neural network;

if the activation function of the activation function layer in the neural network is not the ReLU function, performing the fixed-point processing based on each of low-bit quantization results in the retrained neural network.

10. A fixed-point apparatus for a neural network, wherein the apparatus comprises:
at least one of the following quantization modules for performing low-bit quantization on a neural network:

a convolutional layer input activation value quantization module, configured for performing a first low-bit quantization on input activation values of convolutional layers in the neural network;

a convolutional layer weight quantization module, configured for performing a second low-bit quantization on weights of convolution kernels of the convolutional layers in the neural network;

a non-convolutional functional layer input activation value quantization module, configured for performing a third low-bit quantization on input activation values of non-convolutional functional layers other than the convolutional layers in the neural network;

a retraining module, configured for retraining the current low-bit quantized neural network;

a fixed-point module, configured for performing fixed-point processing based on each of low-bit quantization results in the retrained neural network;

a loading module, configured for loading the fixed-point neural network;

wherein the first low-bit, the second low-bit, and the third low-bit are within 1 to 8 bits.

11. The fixed-point apparatus of claim 10, wherein the convolutional layer input activation value quantization module is specifically configured for inputting training data to the neural network to calculate first activation values of each of convolutional layers; for respective first activation values of any convolutional layer, performing the following steps: determining a current quantization step according to a distribution of the respective first activation values of this convolutional layer; calculating a upper value limit for limiting a value range of first activation values of this convolutional layer according to the current quantization step and the first low-bit; obtaining, according to the upper value limit, a value for each of the first activation values of this convolutional layer to obtain respective second activation values of this convolutional layer; and quantizing the respective second activation values of this convolutional layer to obtain respective quantized activation values of this convolutional layer.

12. The fixed-point apparatus of claim 10, wherein the convolutional layer weight quantization module is specifically configured for performing the following steps for any output channel in any convolutional layer: obtaining each of first weights of convolution kernels corresponding to this output channel; determining, according to a distribution of each of the first weights, a current weight quantization threshold of this output channel; obtaining, based on the current weight quantization threshold, a current quantization weight of each of the first weights of this output channel;

determining an estimation error of this output channel according to an error between the current quantization weight of each first weight of the first weights of the output channel and this first weight; if the estimation error exceeds an error threshold, adjusting the current weight quantization threshold, and returning to perform the step of obtaining the current quantization weight of each of the first weights of the output channel based on the current weight quantization threshold, until the estimation error does not exceed the error threshold, and using the current weight quantization threshold corresponding to the estimation error as a weight quantization threshold coefficient of this output channel; calculating a first amplitude of this output channel based on the weight quantization threshold coefficient; based on the first amplitude of this output channel, using the second low-bit to express a low-bit of the first weight to obtain a second weight; according to a comparison result between the second weight and the first amplitude of this output channel, quantizing the weight quantization threshold coefficient of this output channel to obtain a coefficient quantization value of the weight quantization threshold coefficient of this output channel.

**13.** The fixed-point apparatus of claim 12, wherein the convolutional layer weight quantization module, in determining the current weight quantization threshold of this output channel according to the distribution of each of the first weights, is specifically configured for accumulating squares of respective first weights in the convolution kernels corresponding to this output channel to obtain an accumulation result of this output channel; and determining the current weight quantization threshold in a specified threshold range based on the accumulation result of this output channel;

the convolutional layer weight quantization module, in obtaining the current quantization weight of each of the first weights of this output channel based on the current weight quantization threshold, is specifically configured for calculating a product of the accumulation result of this output channel and the current weight quantization threshold, to obtain a current amplitude of this output channel; comparing each of the first weights in the convolution kernels corresponding to the output channel with the current amplitude; for any first weight, if this first weight is greater than the current amplitude, assigning the current amplitude to this first weight to obtain a current quantization weight of this first weight; for any first weight, if this first weight is less than a negative number of the current amplitude, assigning the negative number of the current amplitude to this first weight, to obtain the current quantization weight of this first weight; for any first weight, if this first weight is greater than or equal to the negative number of the current amplitude, and is less than or equal to the current amplitude, assigning 0 to the first weight, to obtain the current quantization weight of this first weight;
the convolutional layer weight quantization module, in determining the estimation error of this output channel according to the error between the current quantization weight of each of the first weights of this output channel and this first weight, is specifically configured for calculating an average error or an accumulation error of all of the errors according to the error between the current quantization weight of each of the first weights of this output channel and this first weight;
the convolutional layer weight quantization module, in calculating the first amplitude of this output channel based on the weight quantization threshold coefficient, is specifically configured for calculating a product of the accumulation result of this output channel and the weight quantization threshold coefficient of this output channel to obtain the first amplitude of this output channel.

**14.** The fixed-point apparatus of claim 13, wherein the convolution layer weight quantization module, in using the second low-bit to express the low-bit of the first weight based on the first amplitude of this output channel to obtain the second weight, is specifically configured for using one second low-bit base to express the first weight to obtain the second weight, for an insensitive convolutional layer; using at least two second low-bit bases to express the first weight to obtain the second weight, for a sensitive convolutional layer;
the retraining module is specifically configured for, for any convolutional layer, calculating a weight of each of output channels according to the coefficient quantization value of the weight quantization threshold coefficient and the first amplitude of each of the output channels in the convolutional layer, to obtain a first quantization weight, and inputting the first quantization weight of each of the output channels into the neural network for retraining.

**15.** The fixed-point apparatus of claim 14, wherein the convolutional layer weight quantization module, in using the one second low-bit base to express the first weight to obtain the second weight for the insensitive convolutional layer, is specifically configured for determining one fixed-point value of the weight quantization threshold coefficient according to a fixed-point value range determined by the second low-bit; calculating a product of the fixed-point value and the first amplitude to obtain the second weight;

the convolutional layer weight quantization module, in quantizing the weight quantization threshold coefficient of this output channel according to the comparison result between the second weight and the first amplitude of this output channel to obtain the coefficient quantization value of the weight quantization threshold of this output channel, is specifically configured for comparing the second weight with the first amplitude of this output channel; if the second weight is greater than the first amplitude, using the fixed-point value of the weight quantization threshold coefficient itself as a first coefficient quantization value of the weight quantization threshold coefficient; if the second weight value is less than a negative number of the first amplitude, using the negative number of the fixed-point value of the weight quantization threshold coefficient as the first coefficient quantization value of the weight quantization threshold coefficient; if the second weight is greater than or equal to the negative number of the first amplitude and less than or equal to the first amplitude, using 0 as the first coefficient quantization value of the weight quantization threshold coefficient;

the convolutional layer weight quantization module, in calculating a weight of each of output channels according to the coefficient quantization value of the weight quantization threshold coefficient and the first amplitude of each of the output channels in the convolutional layer to obtain the first quantization weight, is specifically configured for multiplying, for any output channel in any convolutional layer, the first amplitude of this output channel by the first coefficient quantization value of the weight quantization threshold coefficient of this output channel, to obtain a first quantization weight of this output channel.

16. The fixed-point apparatus of claim 15, wherein the convolutional layer weight quantization module, in using at least two second low-bit bases to express the first weight for the sensitive convolutional layer to obtain the second weight, is specifically configured for determining at least two fixed-point values of the weight quantization threshold coefficient according to the fixed-point value range determined by the second low-bit to obtain a combined weight quantization threshold coefficient; selecting at least two combined output channels from the convolutional layer; wherein the number of the combined output channels is the same as the number of the combined weight quantization threshold coefficients; multiplying a first amplitude of a combined output channel by a combined weight quantization threshold coefficient, and summing all the multiplied results to obtain the second weight;

the convolutional layer weight quantization module, in quantizing the weight quantization threshold coefficient of this output channel according to the comparison result between the second weight and the first amplitude of this output channel to obtain the coefficient quantization value of the weight quantization threshold of this output channel, is specifically configured for performing the following steps for any combined output channel in any convolutional layer: taking a result of multiplying the first amplitude of this combined output channel by a combined weight quantization threshold coefficient of this combined output channel as a second amplitude; comparing the second weight with the second amplitude of this output channel; if the second weight is greater than the second amplitude, using the fixed-point value of the combined weight quantization threshold coefficient of this combined output channel itself as a second coefficient quantization value of the combined weight quantization threshold coefficient; if the second weight is less than a negative number of the second amplitude, using the negative number of the fixed-point value of the combined weight quantization threshold coefficient of this combined output channel as the second coefficient quantization value of the combined weight quantization threshold coefficient; if the second weight is greater than or equal to the negative number of the second amplitude and less than or equal to the second amplitude, using 0 as the second coefficient quantization value of the combined weight quantization threshold coefficient;

the convolutional layer weight quantization module, in calculating the weight of each of the output channels according to the coefficient quantization value of the weight quantization threshold coefficient and the second amplitude of each of the output channels in the convolutional layer to obtain the first quantization weight, is specifically configured for calculating, for any convolutional layer, a sum of products of first amplitudes of respective combined output channels by the second coefficient quantization value of this combined output channel, to obtain the first quantization weight as a quantization result of each of the first weights in the convolution kernels corresponding to this output channel.

17. The fixed-point apparatus of claim 10, wherein the non-convolutional layer input activation value quantization module is specifically configured for obtaining third activation values of each of the non-convolutional functional layers; for respective third activation values of any non-convolutional layer, performing the following steps: determining a current quantization step according to a distribution of the respective third activation values of this non-convolutional functional layer; calculating a upper value limit for limiting a value range of the third activation values of this convolutional layer according to the current quantization step and a third low-bit; obtaining, according to the upper value limit, a value for each of the third activation values of this non-convolutional functional layer to obtain each of fourth activation values of this non-convolutional functional layer; and quantizing the fourth activation values of this non-convolutional functional layer to obtain respective quantized activation values of this non-convolutional layer.

**18.** The fixed-point apparatus of claim 10, wherein the apparatus further comprises:

a determining module, configured for determining whether an activation function of an activation function layer in the neural network is a ReLU function;

a function processing module, configured for, if the determining module determines that the activation function of the activation function layer in the neural network is the ReLU function, converting a quantized activation value output by the ReLU function from an unsigned number to a signed number, subtracting an offset from an activation value of the signed number, deleting the ReLU function, compensating the offset in a convolutional layer or other functional layers to which the activation value is input, and performing the fixed-point processing based on each of low-bit quantization results in the retrained neural network;

a retraining module, configured for, if the determining module determines that the activation function of the activation function layer in the neural network is not the ReLU function, performing the fixed-point processing based on each of low-bit quantization results in the retrained neural network.

**19.** A computer device, comprising a processor and a machine-readable storage medium, the machine-readable storage medium stores machine-executable instructions executable by a processor, the processor is caused by the machine-executable instructions to implement the method of any one of claims 1 to 9.

**20.** A machine-readable storage medium storing machine executable instructions, which when called and executed by a processor, cause the processor to implement the method of any one of claims 1-9.

**21.** A computer program product, wherein the computer program product, when being executed, is configured for implementing the method of any one of claims 1-9.

EP 4 123 513 A1

FIG. 1

33

Start

Inputting training data to a convolutional neural network, and calculating forwardly first activation values output by each of activation function layers — 201

Determining a current quantization step of the first activation values output by each of activation function layers according to a current distribution of the first activation values output by each of activation function layers — 202

For the first activation values output by each of activation function layers, according to the current quantization step of each of activation function layers determined in the previous step, solving an upper value limit of the first activation values, and limiting a value range of the first activation values according to the solved upper value limit to obtain second activation values of each of activation function layers — 203

Quantizing the second activation values of each of activation function layers to obtain each of quantized activation values — 204

Input activation function quantization of th convolutional layer

Retraining the current convolutional neural network — 205

206

FIG. 2a

Based on the current convolutional neural network, obtaining each first weight in each convolution kernel in each of convolutional layers; for each output channel of each of convolution layers, accumulating squares of respective first weights in the convolution kernels corresponding to this output channel to obtain an accumulation result of the squares of the first weights of this output channel. Determining a current weight quantization threshold in a specified threshold range based on the accumulation result of this output channel — 206

Obtaining a weight quantization threshold coefficient of an output channel

Based on the current weight quantization threshold of each of output channels, quantizing each of first weights in the convolution kernels corresponding to each of output channels, to obtain the current quantization weight of each of first weights in the convolution kernels corresponding to each of output channels — 207

No — Determining whether an estimation error is less than a set error threshold — 208

Yes

Calculating a first amplitude of each of output channels based on the weight quantization threshold coefficient of each of output channels and the accumulation result — 209

Solving fixed-point data of the weight quantization threshold coefficient

Based on the first amplitude of each of output channels in each of convolutional layers, using a second low-bit to represent a first weight in the convolution kernel corresponding to each of output channels in each of convolutional layers, to obtain a second weight — 210

Quantizing weight quantization threshold coefficients corresponding to each of output channels, to obtain quantized weight quantization threshold coefficients corresponding to each of output channels — 211

Retraining the low-bit quantized neural network — 212

Convolutional layer weight quantization

In the normalization layer, the output result distribution is normalized so that the distribution satisfies the normal distribution; for the first amplitude of each of output channel of the convolutional layer, each of channel parameters of the normalization layer connected to the convolutional layer is multiplied by the first amplitude to update the first amplitude — 213

Quantizing the input activation values of each of non-convolutional functional layers in the neural network through a dynamic quantization algorithm — 214

Determining whether an activation function of an activation function layer is a ReLU function — 215

No

Yes

Subtracting an offset from the quantized activation value output by ReLU function, and then compensating this offset in the functional layer to which the activation values are input

Converting the input values and output values of the ReLU activation function from unsigned numbers to signed numbers

Performing fixed-point processing on the entire network parameters — 216

End

FIG. 2b

FIG. 3

FIG. 4

Start

Inputting training data to a convolutional neural network, and calculating forwardly first activation values output by each of activation function layers
— 501

Determining a current quantization step of the first activation values output by each of activation function layers according to current distribution of the first activation values output by each of activation function layers
— 502

For the first activation values output by each of activation function layers, according to the current quantization step of each of activation function layers determined in the previous step, solving an upper value limit of the first activation values, and limiting a value range of the first activation values according to the solved upper value limit to obtain second activation values of each of activation function layers
— 503

Input activation function quantization of the convolutional layer

Quantizing the second activation values of each of activation function layers to obtain each of quantized activation values
— 504

— 505

Determining a current quantization step according to a distribution of respective third activation values of this non-convolutional functional layer

Calculating a upper value limit for limiting a value range of the third activation values of this convolutional layer according to the current quantization step and a third low-bit

Input activation function quantization of the non-convolutional layer

Obtaining, according to the upper value limit, a value for each of the third activation values of this non-convolutional functional layer to obtain each of fourth activation values of this non-convolutional functional layer

Quantizingthe fourth activation values of this non-convolutional functional layer to obtain respective quantized activation values of this non-convolutional functional layer

Retraining the current convolutional neural network
— 506

Determining whether the activation function of the activation function layer is a ReLU function
— 507

N

Y

Subtracting an offset from the quantized activation value output by ReLU function, and then compensating this offset in the functional layer to which the activation values are input

Based on the quantization result, performing fixed-point processing on the relevant parameters
— 508

End

FIG. 5

FIG. 6

Convolutional layer input activation value quantization module

Convolutional layer weight quantization module

Non-convolutional functional layer input activation value quantization module

Retraining module

Fix-point module

Loading module

FIG. 7

Multiple vehicle-mounted surround-view cameras are used to capture images of a current road condition

Low-bit fixed-point neural network is used to calculate the images of the current road condition

Identify the relevant detection objects such as pedestrians, vehicles in the current road condition

controlling the vehicle according to the current object detection result

Automatic parking terminal device based on FPGA chips

FIG. 8

The access control camera captures a to-be-recognized target to obtain a to-be-recognized object image

Low-bit fixed-point neural network performs the calculation on the current image

Obtain a recognition feature of the current image according to the network calculation result

Compare the recognition feature with the existing features in the library

Recognition terminal device based on DSP chips

FIG. 9

Processor 1001

Machine-readable storage medium 1002

FIG. 10

| INTERNATIONAL SEARCH REPORT | International application No. |
|---|---|
| | **PCT/CN2021/079815** |

**A. CLASSIFICATION OF SUBJECT MATTER**

G06N 3/063(2006.01)i; G06N 3/04(2006.01)i

According to International Patent Classification (IPC) or to both national classification and IPC

**B. FIELDS SEARCHED**

Minimum documentation searched (classification system followed by classification symbols)

G06N,G06K

Documentation searched other than minimum documentation to the extent that such documents are included in the fields searched

Electronic data base consulted during the international search (name of data base and, where practicable, search terms used)

CNPAT, CNKI, EPODOC, WPI, IEEE, 互联网: 神经网络, 输入激活值, 输入特征值, 卷积核, 权值, 量化; neural network, weight, quantization, convolution

**C. DOCUMENTS CONSIDERED TO BE RELEVANT**

| Category* | Citation of document, with indication, where appropriate, of the relevant passages | Relevant to claim No. |
|---|---|---|
| X | CN 110555508 A (BEIJING DEEPHI INTELLIGENT TECHNOLOGY CO., LTD.) 10 December 2019 (2019-12-10) description, paragraphs [0033]-[0125] and figures 1-8 | 1, 10, 19-21 |
| A | CN 110555450 A (BEIJING DEEPHI INTELLIGENT TECHNOLOGY CO., LTD.) 10 December 2019 (2019-12-10) entire document | 1-21 |
| A | CN 110852434 A (CHENGDU HENGCHUANG XINXING TECHNOLOGY CO., LTD.) 28 February 2020 (2020-02-28) entire document | 1-21 |
| A | CN 109409514 A (GUANGZHOU CITY PAGODA INFORMATION TECHNOLOGY CO., LTD.) 01 March 2019 (2019-03-01) entire document | 1-21 |
| A | CN 110598723 A (BEIJING DEEPHI INTELLIGENT TECHNOLOGY CO., LTD.) 20 December 2019 (2019-12-20) entire document | 1-21 |
| A | US 2020012926 A1 (HITACHI, LTD.) 09 January 2020 (2020-01-09) entire document | 1-21 |

☑ Further documents are listed in the continuation of Box C.      ☑ See patent family annex.

| | |
|---|---|
| * Special categories of cited documents: <br> "A" document defining the general state of the art which is not considered to be of particular relevance <br> "E" earlier application or patent but published on or after the international filing date <br> "L" document which may throw doubts on priority claim(s) or which is cited to establish the publication date of another citation or other special reason (as specified) <br> "O" document referring to an oral disclosure, use, exhibition or other means <br> "P" document published prior to the international filing date but later than the priority date claimed | "T" later document published after the international filing date or priority date and not in conflict with the application but cited to understand the principle or theory underlying the invention <br> "X" document of particular relevance; the claimed invention cannot be considered novel or cannot be considered to involve an inventive step when the document is taken alone <br> "Y" document of particular relevance; the claimed invention cannot be considered to involve an inventive step when the document is combined with one or more other such documents, such combination being obvious to a person skilled in the art <br> "&" document member of the same patent family |

| Date of the actual completion of the international search | Date of mailing of the international search report |
|---|---|
| **21 May 2021** | **09 June 2021** |

| Name and mailing address of the ISA/CN | Authorized officer |
|---|---|
| **China National Intellectual Property Administration (ISA/ CN)** <br> **No. 6, Xitucheng Road, Jimenqiao, Haidian District, Beijing 100088** <br> **China** | |
| Facsimile No. **(86-10)62019451** | Telephone No. |

Form PCT/ISA/210 (second sheet) (January 2015)

## INTERNATIONAL SEARCH REPORT

| International application No. |
| --- |
| **PCT/CN2021/079815** |

**C.   DOCUMENTS CONSIDERED TO BE RELEVANT**

| Category* | Citation of document, with indication, where appropriate, of the relevant passages | Relevant to claim No. |
| --- | --- | --- |
| A | US 2019347550 A1 (SAMSUNG ELECTRONICS CO., LTD.) 14 November 2019 (2019-11-14)<br>       entire document | 1-21 |
| A | EP 3242254 A1 (IMAGINATION TECHNOLOGIES LIMITED) 08 November 2017 (2017-11-08)<br>       entire document | 1-21 |

Form PCT/ISA/210 (second sheet) (January 2015)

EP 4 123 513 A1

**INTERNATIONAL SEARCH REPORT**
Information on patent family members

International application No.

**PCT/CN2021/079815**

| Patent document cited in search report | | | Publication date (day/month/year) | Patent family member(s) | | | Publication date (day/month/year) |
|---|---|---|---|---|---|---|---|
| CN | 110555508 | A | 10 December 2019 | None | | | |
| CN | 110555450 | A | 10 December 2019 | None | | | |
| CN | 110852434 | A | 28 February 2020 | None | | | |
| CN | 109409514 | A | 01 March 2019 | None | | | |
| CN | 110598723 | A | 20 December 2019 | None | | | |
| US | 2020012926 | A1 | 09 January 2020 | JP | 2020009048 | A | 16 January 2020 |
| US | 2019347550 | A1 | 14 November 2019 | None | | | |
| EP | 3242254 | A1 | 08 November 2017 | GB | 201607713 | D0 | 15 June 2016 |
| | | | | GB | 2552243 | A | 17 January 2018 |
| | | | | GB | 202015694 | D0 | 18 November 2020 |
| | | | | GB | 202008977 | D0 | 29 July 2020 |
| | | | | GB | 2584243 | A | 25 November 2020 |
| | | | | EP | 3242253 | A1 | 08 November 2017 |
| | | | | GB | 2582519 | A | 23 September 2020 |
| | | | | JP | 2018010618 | A | 18 January 2018 |
| | | | | CN | 107403221 | A | 28 November 2017 |
| | | | | GB | 201707040 | D0 | 14 June 2017 |
| | | | | US | 2017323197 | A1 | 09 November 2017 |
| | | | | GB | 2585609 | A | 13 January 2021 |
| | | | | US | 2017323196 | A1 | 09 November 2017 |
| | | | | GB | 202012271 | D0 | 23 September 2020 |
| | | | | GB | 2552242 | A | 17 January 2018 |
| | | | | GB | 201707039 | D0 | 14 June 2017 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202010186495